# EUROPEAN PATENT SPECIFICATION

(11) **EP 0 705 523 B1**
(45) Date of publication and mention of the grant of the patent: **03.05.2000**
(21) Application number: 94920063.8
(22) Date of filing: 02.06.1994
(51) Int. Cl.: H04Q 7/20, H04B 7/26

(54) **SYSTEM AND METHOD FOR USING ISDN EKTS TECHNOLOGY FOR CELLULAR MOBILE SYSTEMS**
SYSTEM UND VERFAHREN FÜR VERWENDUNG VON ISDN EKTS TECHNOLOGIE FÜR ZELLULAREMOBILE SYSTEME
SYSTEME ET PROCEDE D'UTILISATION D'UNE TECHNOLOGIE RNIS EKTS POUR DES SYSTEMES MOBILES CELLULAIRES

(30) Priority: 22.06.1993 US 81739
(43) Date of publication of application: 10.04.1996
(73) Proprietor: Siemens Telecom Networks, Boca Raton, FL 33487 (US)
(72) Inventor: SHRADER, David, C., Coral Springs, FL 33076 (US); HITCHCOCK, Gary, L., Parkland, FL 33067 (US); BUYUKDURA, Feza, H., Boca Raton, FL 33496 (US); ELY, Edwin, R., Coral Springs, FL 33067 (US)
(74) Representative: Litchfield, Laura Marie
(86) International application number: US9406199
(87) International publication number: WO9501071

(56) References cited:
- EP-A- 0 504 122
- EP-A- 0 544 447
- WO-A-91/18483

## Description

### BACKGROUND OF THE DISCLOSURE

### 1. Field of the Invention

This invention relates generally to a system and concomitant methodology for handling incoming calls to and outgoing calls from a cellular mobile user, and for handling the handoff of an established call when the user moves from one cell to another; this invention relates, more particularly, to ISDN procedures and circuitry used with a central office and associated base stations to effect such handling.

### 2. Description of the Prior Art

A typical cellular mobile system is composed of numerous mobile units, such as handsets operated by individual system users, which home-on associated base stations. A single base station serves a number of mobile units that lie within a simply connected geographical area -- a cell -- identified to that single base unit.

Most of the current cellular mobile systems use a registration method to keep track of the locations of the mobile units. A specific base station serves as a controller for the units within an assigned cell. Each mobile unit is required to inform, that is, register with, the base station its location when the user moves from the original cell into a new cell. This registration process is typically accomplished automatically by the mobile unit, but the registration may also be effected manually by the user of the unit. The base station will, in turn, pass the registration information to the serving switching office.

Since a conventional cellular mobile system generally covers a geographical area larger than a single switching office, the registration process requires the coordination among a plurality of switching offices, and such registration process may involve the use of centralized databases in the serving network to keep track of mobile unit locations.

When multiple switching offices are involved, the handoff process to maintain an established call as the user moves from one cell (original) to another cell (secondary), becomes somewhat complicated. To ensure a smooth and interrupt-free handoff, two parallel communication paths must be set-up between the mobile unit and original and secondary base stations serving the original cell and secondary cell, respectively. These two communication paths must be merged in the associated switching offices until the original base station breaks its communication path with the mobile unit. Current cellular mobile systems use complex and cumbersome procedures to handle such handoffs; in practice, dedicated signaling and switching procedures are required to handle these handoffs in order to allow moving from one call to another, that is, one base station to another when the base stations are connected to different switching offices.

Representative of the prior art in this area of technology is the digital mobile network configuration of the EWSD switching system supplied by the Siemens AG. In this EWSD configuration, a base station serving a cell is connected via a digital carrier, such as DS1, to a radio network controller which functions to off-load processing of the radio part of the call from the switching office. The radio network controller is further connected, also via digital carrier links, to conventional line/trunk groups interfacing a switch in the switching center which ultimately switches the call. A network management module for the radio subsystem, that is, base station and radio network controller, is coupled to the switches via an interposed processor which coordinates management activities. The mechanism provided by such an architecture is based on a centralized database which contains the mobile subscribers home information. The switches themselves have only temporary information about visiting subscribers at any particular instance. Using transaction capabilities over a common signaling network such as SS7, the information from the centralized databases is transferred to the switches when necessary to handle, for example, handoffs.

There are applications of mobile cellular systems in which the use of multiple switching offices is not a strict requirement. The service area of a single switching office is, in these applications, sufficient for many practical situations such as wireless CENTREX. The type of switching office can then be a central office (CO) belonging to the public switching network. A CO-based CENTREX is a service providing a business telephone customer with direct inward dialing to phone extensions on the business customer's premises as well as direct outward dialing from these extensions. A CENTREX service offering normally includes several useful features such as call forwarding, call transfer, speed calling, and attendant service. A CO-based wireless CENTREX allows a selected set of members of a CENTREX office to carry mobile handsets that are not wired to the serving central office, but yet have access to the regular CENTREX features.

Another wireless mobile cellular application is Personal Communications Service (PCS) for which the serving area of a single switching office is also sufficient. A PCS application using existing generic signaling and switching procedures, although limited to a switching office serving area, can also be advantageously used as a trial or a start-up application.

In these limited service area applications, the use of centralized databases, the process of registration between the handset, base station and the switching network, and the use of complicated and dedicated signaling and switching procedures may be too expensive when compared to a method that would be limited to a single switching office and which would only use existing generic signaling and switching procedures.

ISDN technology is now being deployed in the telephony field and ISDN is becoming the accepted method for evolving voice and data communications. ISDN uses a well-defined and standardized signaling protocol between a user terminal and the serving switching office to allow call set-up, connection, and termination procedures as well as offering supplementary services. The definition of the ISDN technology is included in the ANSI standards and CCITT recommendations.

WO 91/18483 relates to interfacing between a GSM cellular radio network and an integrated services digital network (ISDN). This document relates to the provision in the interface of means for mapping data carried on the ISDN control channel onto the GSM traffic channel in a packet form. The control information carried on the control channel of the ISDN network and on the Dm channel in the GSM network is mapped directly between the respective channels using look-up tables and bit-rate convertors.

One supplementary service offering built upon the principles of ISDN is the Electronic Key Telephone Service (EKTS); EKTS allow multiple telephone sets to simultaneously respond to an incoming call for a given telephone number, for instance, a multiple appearance of a directory number (DN) or extension. EKTS also allows these telephone sets to make outgoing calls from the DNs or extensions, or to bridge onto an existing call for an active DN or extension. AN ISDN-based EKTS system uses enhancements to the basic ISDN technology to offer EKTS capability.

Thus, a need exists in the art for mobile services which utilize existing features and functions offered by a single switching office having ISDN capability, including EKTS features, thereby eliminating the need for special procedures and databases to handle such services.

### SUMMARY OF THE INVENTION

These shortcomings and other limitations and deficiencies of the prior art are obviated, in accordance with the present invention, by a call processing methodology and concomitant system based on ISDN EKTS technology which can broadcast incoming calls to all base stations and which uses the ISDN EKTS bridging capability to handle base station handoff. Each cellular mobile user is assigned a unique EKTS Directory Number (DN) or extension number. For a given cellular mobile communication application, all base stations for that application are connected to the same central office. The central office treats these base stations as ISDN EKTS terminals that share all directory numbers or extensions for that cellular mobile communication application.

Broadly, with respect to an illustrative embodiment of the aspect of the present invention related to the methodology for processing an outgoing call from a cellular mobile calling user, each cellular mobile user has access to a cellular network which covers a number of cells served by a corresponding number of base stations. All of the base stations are connected to the same central office in an Integrated Services Digital Network; in addition, the central office is configured to provide Electronic Key Telephone Service to the base stations. To establish a communication connection between a cellular calling user and a called user, each base station is configured with a radio port to transceive radio signals with cellular users within the corresponding cell, and with an ISDN-based EKTS port to transceive EKTS signaling messages with the central office via an access interface having D- and B-channels. When a cellular calling user requests a communication connection with a called user, the request is initially received by the radio port of the base station serving the cell where the cellular calling user is located. This base station converts the request to D-channel protocol signaling messages and then transceives the signaling messages with the central office to proceed with the call set-up. Upon an answer response by the called user and further protocol signaling messages to complete the D-channel protocol processing, a B-channel is set-up between the called user and the base station serving the cellular mobile calling user. The incoming B-channel information (e.g., audible speech) to the base station is converted to radio signals for propagation to the cellular calling user, and radio signals propagated by the cellular calling user are converted to a format for transmission over the B-channel to the called user, thereby completing the desired communication connection.

Broadly, with respect to an illustrative embodiment of the aspect of the present invention related to the methodology for processing an incoming call to a cellular mobile user, each cellular mobile user has access to a cellular network which covers a number of cells served by a corresponding number of base stations. All of the base stations are connected to the same central office in an Integrated Services Digital Network; in addition, the central office is configured to provide Electronic Key Telephone Service to the base stations. To establish a communication connection between an incoming calling user and a cellular mobile user, each base station is configured with a radio port to transceive radio signals with cellular users within the corresponding cell, and with an ISDN-based EKTS port to transceive EKTS signaling messages with the central office via an access interface having D- and B-channels. When the incoming calling user requests a communication connection with a cellular mobile called user, the request is initially received at the central office from the incoming calling user. In turn, the central office transceives D-channel call set-up protocol signaling messages between the central office and the ISDN-based EKTS port of each of the base stations that share the EKTS DN. The base stations convert these signaling messages to a radio set-up signal corresponding to the request and propagate the radio set-up signal from the radio port of each of the base stations. The radio set-up signal is detected by each of the cellular mobile users and the identity of the cellular mobile called user is determined from the identifier in the radio set-up signal. The identified cellular mobile called user returns a corresponding radio set-up signal to its associated base station. With the location of the cellular mobile called user now known, a B-channel is established between the associated base station and the incoming calling user. The incoming B-channel information (e.g., audible speech) received at the associated base station is converted to outgoing radio information signals for transmission to the cellular mobile called user, and the incoming radio information signals from the cellular mobile called user are converted to information compatible with transmission over the B-channel to the incoming calling user, thereby completing the desired communication connection.

Broadly, with respect to an illustrative embodiment of the aspect of the present invention related to the stable call handoff methodology, each cellular mobile user has access to a cellular network which covers a number of cells served by a corresponding number of base stations. All of the base stations are connected to the same central office in an Integrated Services Digital Network; in addition, the central office is configured to provide Electronic Key Telephone Service to the base stations. To handle a handoff of an existing communication connection between a cellular mobile user and another user, each base station is configured with a radio port to transceive radio signals with cellular users within the corresponding cell, and with an ISDN-based EKTS port to transceive EKTS signaling messages with the central office via an access interface having D- and B-channels. When the cellular mobile user moves from an original cell served by an original base station to a secondary cell served by a secondary base station, such movement being detected by tracking the unique identifier in the radio signals propagated by the cellular mobile user at the secondary base station or by an explicit request from the cellular mobile user to the secondary base station, the secondary base station requests to bridge onto the existing communication connection by transceiving D-channel protocol messages with the central office. The outcome of this interchange is a three-way B-channel communication connection involving both the original and secondary base stations. The original base station is notified of this bridging activity by other D-channel protocol signaling messages and disconnects from the three-way connection, thereby producing a two-way B-channel communication connection between the secondary base station and the other user. The incoming B-channel information (e.g., audible speech) received at the secondary base station is converted to outgoing radio information signals for transmission to the cellular mobile user, and the incoming radio information signals received from the cellular mobile user are converted to information compatible for transmission over the B-channel to the other user, thereby completing the handoff of the existing, stable communication connection between the cellular mobile user and the other user.

### BRIEF DESCRIPTION OF THE DRAWINGS

The teachings of the present invention can be readily understood by considering the following detailed description in conjunction with the accompanying drawings, in which:
FIG. 1 is a conceptual model of ISDN depicting user equipment and user-network interfaces;
FIG. 2 is a pictorial representation of the user-network protocol to set-up a call between a calling user and a called user for a standard ISDN telephone call;
FIG. 3 is a pictorial representation of the user-network protocol to take-down a call between a calling user and a called user for a standard ISDN telephone call;
FIG. 4 illustrates the relationship among the three ISDN layers with especial reference to the signaling messages supported by ISDN;
FIG. 5 illustrates an example of a digital switching system configured to support ISDN service;
FIG. 6 depicts an illustrative arrangement of a plurality of EKTS terminals served by a single ISDN switch;
FIG. 7 is a pictorial representation of the ISDN user-network protocol to set-up a call between a calling user outside EKTS and a called user served by EKTS;
FIG. 8 is a pictorial representation of the ISDN user-network protocol to set-up a call to a called user outside EKTS from a calling user served EKTS, and then the bridging of another user served by EKTS onto the established call;
FIG. 9 illustrates an arrangement to request establishment of a communication connection by a cellular mobile calling user;
FIG. 10 illustrates the arrangement for the completed connection for the call originated by a cellular mobile calling user;
FIG. 11 illustrates an arrangement to request establishment of a communication connection between an incoming calling user and a cellular mobile called user;
FIG. 12 illustrates the arrangement to enable the communication connection between the incoming calling user and the cellular mobile called user;
FIG. 13 illustrates the arrangement for a completed connection between the incoming calling user and the cellular mobile called user;
FIG. 14 illustrates an arrangement for a stable communication connection between a cellular mobile user and another user;
FIG. 15 illustrates the arrangement to initialize handoff of the stable call from an original base station in one cell to a secondary base station in another cell;
FIG. 16 illustrates the arrangement of an established three-way call to effect the handoff of the stable call to the secondary cell;
FIG. 17 illustrates the arrangement wherein the original base station releases the stable call;
FIG. 18 illustrates a re-configured arrangement for the stable communication connection wherein the secondary base station now handles the connection between the secondary base station and the other user;
FIG. 19 is a high-level block diagram of a base station for transceiving radio signals from a cellular mobile users and transceiving ISDN D-channel signaling messages and B-channel information; and
FIG. 20 illustrates an arrangement of base stations, switching office and handsets in a PCS environment.

To facilitate understanding, identical reference numerals have been used, where possible, to designate identical elements that are common to the figures.

### DETAILED DESCRIPTION

After considering the following description, those skilled in the art will clearly realize that the teachings of our invention can be readily utilized to provide cellular mobile services in conjunction with an ISDN service offering.

To facilitate understanding the broadest aspects of the present invention, and especially the principles underlying the present invention, it is helpful to first elucidate relevant details of ISDN. This approach has the added advantage of introducing terminology and notation which will further aid in understanding the present invention. Moreover, this approach ensures that the detailed description is essentially self-contained, thereby further facilitating the requirement of teaching one with ordinary skill in the art to make and use this invention. Accordingly, the initial part of the detailed description provides an overview of ISDN, including the Electronic Key Telephone System (EKTS) features utilized in an illustrative embodiment of the present invention. The ISDN topics selected for exposition are carefully chosen to set forth the context and backdrop for the present invention. After this overview, the illustrative embodiment is presented.

### ISDN OVERVIEW

(This overview begins with a motivating discussion of ISDN; the discussion gradually becomes more detailed as the description unfolds so as to introduce concepts and principles in the most understandable manner. A suitable reference which elaborates on additional aspects of ISDN is the text book entitled "ISDN", authored by William Stallings and published by Macmillan Publishing Company, 1989.)

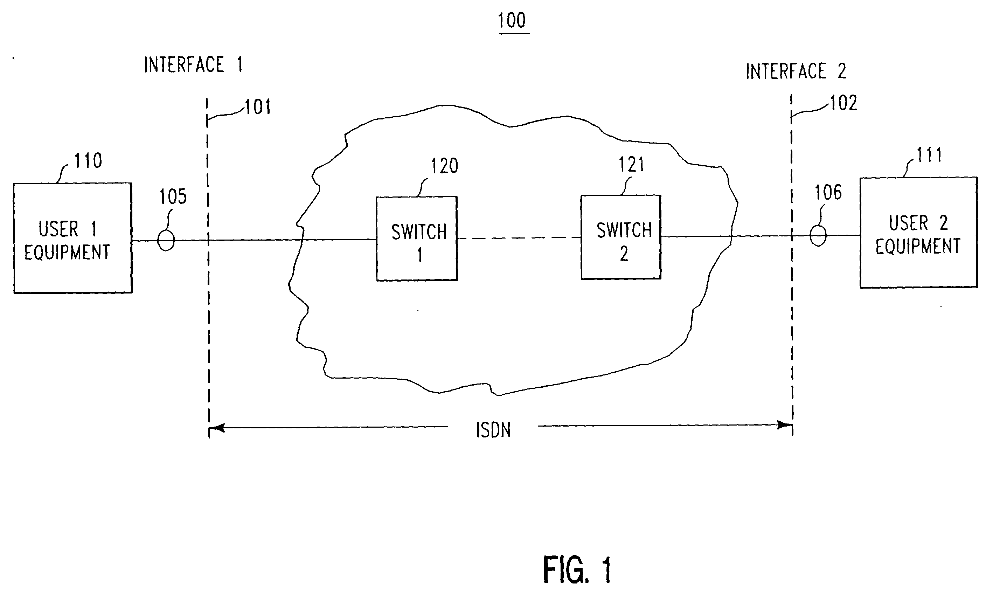

Broadly, with reference to the conceptual model of FIG. 1, ISDN may be viewed as a network 100 that provides end-to-end digital connectivity to support a wide range of user services, such as voice, data and video, to which such users have access utilizing standard, multi-purpose user-network interfaces (e.g. interface 101). Thus, information derived from or destined for customer-provided equipment located at a user's premises (e.g. equipment 110), including such equipment as a telephone, personal computer, stereo, and/or television, is seen at its basic level as data bit streams propagated over a medium (e.g. medium 105) between the user's equipment (e.g. 110) and a centralized switch (e.g. switch 120) embedded in the network. The equipment originating the information is transparent to the switch in the sense that all information has the same manifestation so it can be switched and transported in the same manner (e.g., from switch 120 to switch 121 and eventually over medium 106 to equipment 111 via interface 102.)

As alluded to above, ISDN has a common set of rules so that different types of user equipment can request one or more standard services provided by the network. This is in contrast to conventional telecommunications wherein different types of equipment require different physical and logical interfaces to the network. For instance, a conventional telephone set utilizing the public telephone network typically communicates over a wire-pair connected to a central office; the telephone, as manipulated by the user, interacts with central office via a pre-determined protocol (e.g., DC current flow, dual tone multi-frequency signals, 20 Hz ringing signal) so as to access other users served by the telephone network. A cable TV service requires the deployment of another physical medium (e.g., a coaxial cable) and end-point conversion devices to effect the necessary TV transmission. Generally, each new service requires a separate communications path and a different protocol. ISDN obviates the need for a myriad of paths and protocols since ISDN is fully integrated, that is, a single network provides many kinds of services using a single set of interface rules to govern all equipment using the network.

### Call Processing

ISDN standards define the interface (e.g., interface 101 or 102 in FIG. 1) between the user and the network; the interface is expressed as a set of protocols, including a message set used to request services. To explore the full import of the notion of an interface, an example of an ISDN call set-up is now described.

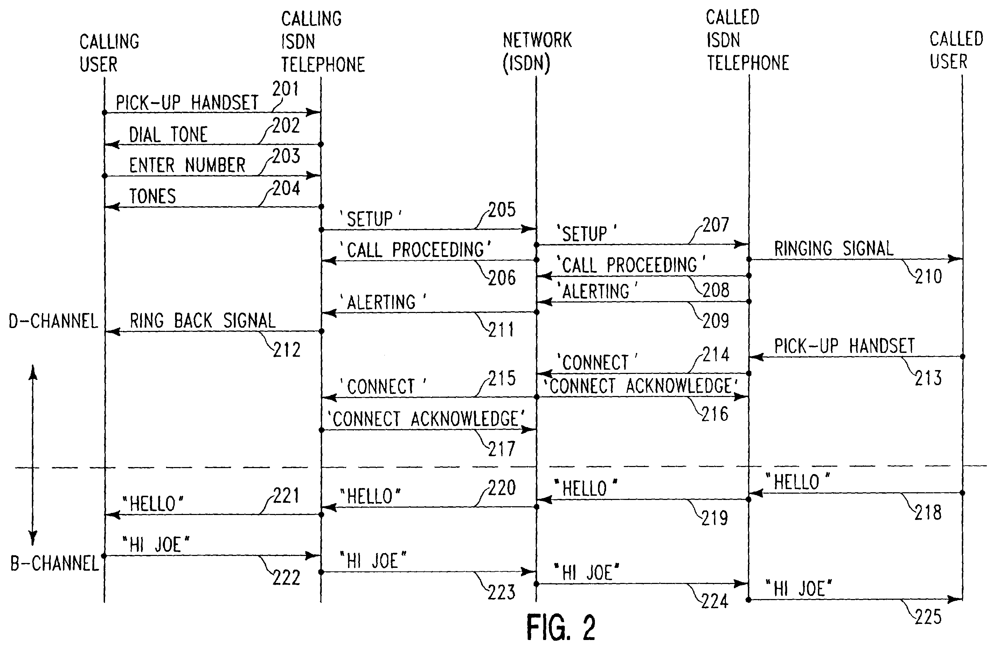

With reference to FIG. 2 there is shown a pictorial representation of the protocol for a call set-up between a calling user and a called user; the protocol is composed of a time-ordered flow of ISDN signaling messages. The calling user initiates a call by picking-up the handset (arrow 201). The calling ISDN telephone itself responds by providing dial tone (arrow 202); there is no ISDN network involvement as yet. (As used in describing FIG. 2, the term "network" is a shorthand for the ISDN combination of the switches and interfaces of FIG. 1.) The calling user enters the telephone number (arrow 203) and hears the tones as the keys are pushed on the telephone keypad (arrow 204). It is only after these four events have occurred that a signaling message is conveyed by the calling ISDN telephone to its switch within the network. This is accomplished by the calling ISDN telephone issuing a 'SETUP' service request (arrow 205). The 'SETUP' message is one standard message from a set of messages defined for ISDN. Each message is composed of a series of information elements encoded with signaling information necessary to support the service desired at the moment, as discussed in more detail later. Thus, each type of message has a very specific purpose and its name usually connotes that purpose. For example, besides the 'SETUP' message, other messages to be exemplified in the call set-up of FIG. 2 include 'CONNECT' and 'ALERTING'. Formally, the 'SETUP' message is defined as the message sent by the calling user to the network and by the network to the called user to initiate a call connection.

Continuing with the call set-up description of FIG. 2, upon receipt of the 'SETUP' message, the network checks to be sure that the contents of the message are valid. Presuming the contents are valid, the network returns a 'CALL PROCEEDING' (arrow 206) message to the calling user to indicate that the call request is valid and that call set-up is in progress. At the called side of the desired connection, the network also sends a 'SETUP' message (arrow 207) to the called user; this 'SETUP' message contains different informational elements than the 'SETUP' message conveyed by the calling ISDN telephone since this 'SETUP' message is serving a different local interface, but the message is compiled in basically the same manner. In the situation illustrated in FIG. 2, the called ISDN telephone's first message is a 'CALL PROCEEDING' message returned to the network (arrow 208). Also, a ringing signal (arrow 210) is sounded by the called ISDN telephone to alert the called user. A follow-up 'ALERTING' message (arrow 209) is also sent from the called ISDN telephone to the network to inform the network that the called ISDN telephone has received the 'SETUP' message and is alerting (ringing) the called user. The network informs the calling ISDN telephone of both the 'CALL PROCEEDING' message (arrow 206) and the 'ALERTING' message (arrow 211). As a result of this 'ALERTING' message, an audible ringback signal (arrow 212) is conveyed to the calling user by the called ISDN telephone. Assuming the called user picks-up the handset to answer the call (arrow 213), the response is a 'CONNECT' message (arrow 214) sent to the network from the called ISDN telephone. When the network receives this message, it sends another 'CONNECT' message to the calling ISDN telephone so a path may be completed over a separate, logical channel to handle the actual human voice communication. Appropriate 'CONNECT ACKNOWLEDGE' messages (arrows 216 and 217) are sent from the network to the called ISDN telephone and from the calling ISDN telephone to the network, respectively, to complete the call set-up sequence.

Once the aforementioned separate, logical channel is established, then the human voice conversation may proceed. This activity is shown by the "Hello" communication from the called user to the calling user (arrows 218-221) and the "Hi Joe" communication from the calling user to the called user (arrows 222-225).

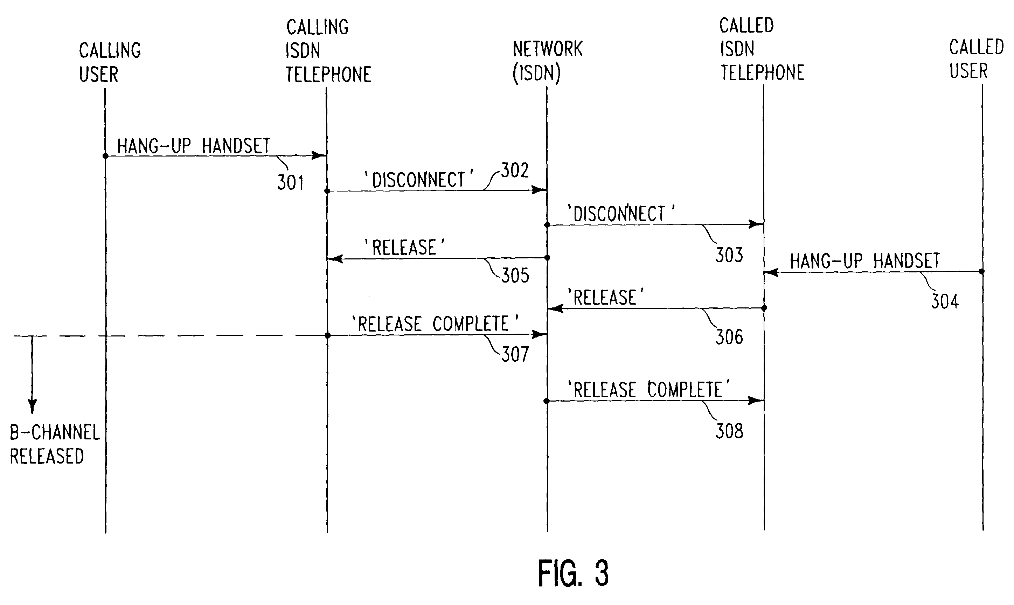

Now with reference to FIG. 3, there is shown a pictorial representation of the protocol, that is, the signaling messages, traversing the ISDN in order to take-down an established call set-up by the protocol of FIG. 2. It is assumed for discussion purposes that the calling user initiates the take-down procedure by hanging up their handset (arrow 301). This activity causes a 'DISCONNECT' message sent by the calling ISDN telephone (arrow 302) to the network; at the same time, the calling ISDN telephone disconnects itself from the established B-channel. The network initiates a 'DISCONNECT' message (arrow 303) to the called user, and returns the 'RELEASE' message (arrow 305) to the calling user. The calling ISDN telephone sends a 'RELEASE COMPLETE' message (arrow 307) to the network and the network releases the B-channel at this interface. The called party will also at some point hang-up their handset (arrow 304), which causes a 'RELEASE' message (arrow 306) to be sent from the called ISDN telephone to the network. The network releases the B-channel at this interface and sends a 'RELEASE COMPLETE' message (arrow 308) to the called ISDN telephone, which also releases the B-channel.

### User-Network Interface

As indicated in the preceding section, ISDN provides at least two basic types of channels that are differentiated by their function and transmission rate; these channels are referred to above as the D-channel and the B-channel. The D-channel's main purpose is that of carrying user-network signaling messages. All ISDN equipment exchange similar messages with the network to request services. The contents of the signaling messages vary with the equipment -- an ISDN telephone would request different services than an ISDN television. In each case, however, the D-channel conveys the services requests. The D-channel typically operates at 16 kbps for a basic rate service offering.

Signals exchanged on the D-channel describe the type of service that the user is requesting. For instance, an ISDN telephone may desire a connection operating at 64 kbps for the support of a human voice conversation. This user request is translated to a request for a communication channel, and such a service is granted by allocating a so-called bearer channel (hence B-channel). Recall that during the discussion of FIG. 2, it was pointed out that the 'CONNECT' message caused a distinct logical path to be set-up for communicating the human voice conversation; specifically, this distinct logical path is a B-channel. The partitioning between the D and B channels is shown on the left-hand side of FIG. 2, wherein all set-up messages utilize the D-channel, but the actual communication makes use of the B-channel. Thus the primary function of the B-channel is to carry voice, data, and video. No service requests from the user are conveyed by the B-channel; this is strictly the domain of the D-channel. A B-channel has a bandwidth capability up to 64 kbps.

ISDN currently defines different access interfaces (e.g. interface 101 of FIG. 1) to the network; one of these is referred to as the basic rate interface (BRI). The access interfaces specify the rate at which the underlying physical medium will operate and the number of available B-channels and D-channels. The BRI is composed of one D-channel and two B-channels. The user data rate on the BRI is 144 kbps (2 at 64 kbps + 16 kbps), although additional signaling for the physical connection requires that the BRI operated at a total bit rate of 192 kbps.

To gain a full appreciation of the ISDN user-network interface for later exploitation by the present invention, it is instructive to provide a broad description of the protocols that are used across the interface and their utilization by the D- and B- channels. The ISDN protocols for the D-channel are encompassed by three layers, as outlined below:
Layer 1: Describes the physical connection between terminal equipment and a network termination, including line coding scheme and electrical characteristics.
Layer 2: Describes the procedures to ensure error-free communication over layer 1 and defines the logical connection between the user and the network.
Layer 3: Describes the user-network interface and signaling messages used to request services from the network.

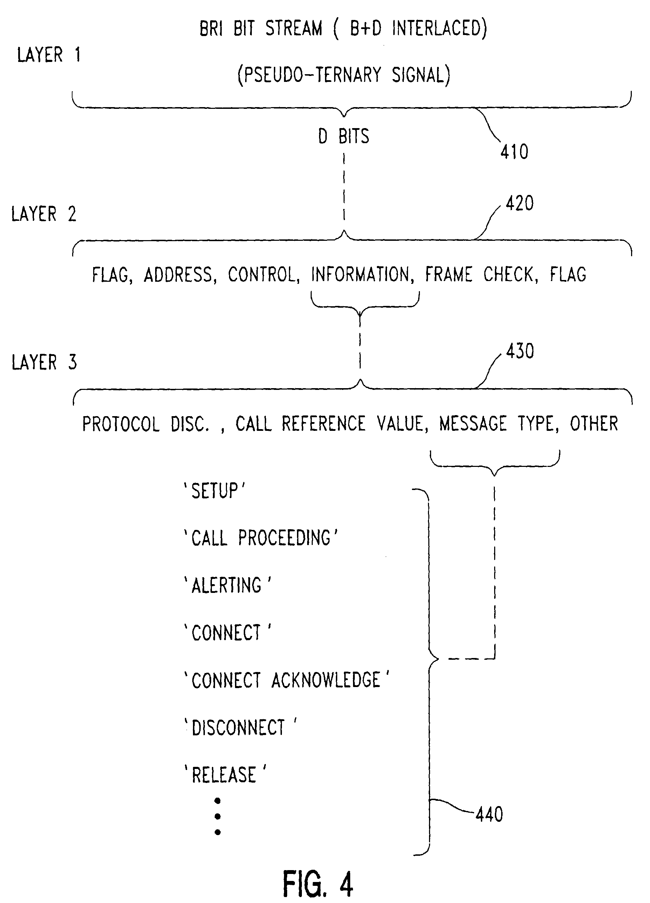

The interaction among the three protocol layers is such that layer 3 signaling messages are carried as a subpart of layer 2 frames, which in turn are transmitted across the layer 1 physical link. In order to succinctly describe this interaction, reference is made to FIG. 4 which depicts the interpretation of the data bit stream propagated by layer 1 over a BRI. The bit stream encompassed by time line 410 uses pseudo-ternary signaling and is formed by interleaving B-channel and D-channel bits. Focusing on only the D-channel bits of this overall BRI bit stream, as depicted by the time line 420, it is shown that certain higher-level information is conveyed at layer 2. For instance, the initial eight bits compose a Flag field, whereas a certain number of the next-arriving bits comprise an Address field, then comes a stream of bits representing the Control field, then the Information field, and finally the Frame Check and another Flag field. From the point of view of the present invention, the Information field is a focal point. As is depicted by time line 430, the Information field can be further subdivided into a number of other fields for interpretation at layer 3. Of the fields at the layer 3 level, the one that conveys the signaling messages is denoted as Message Type along time line 430. Various signaling messages which can be conveyed by this field are depicted by inclusion bracket 440. Such messages as 'SETUP', 'CALL PROCEEDING', ..., and 'RELEASE', which have already been discussed, are listed.

### Digital Switching System with ISDN Capability

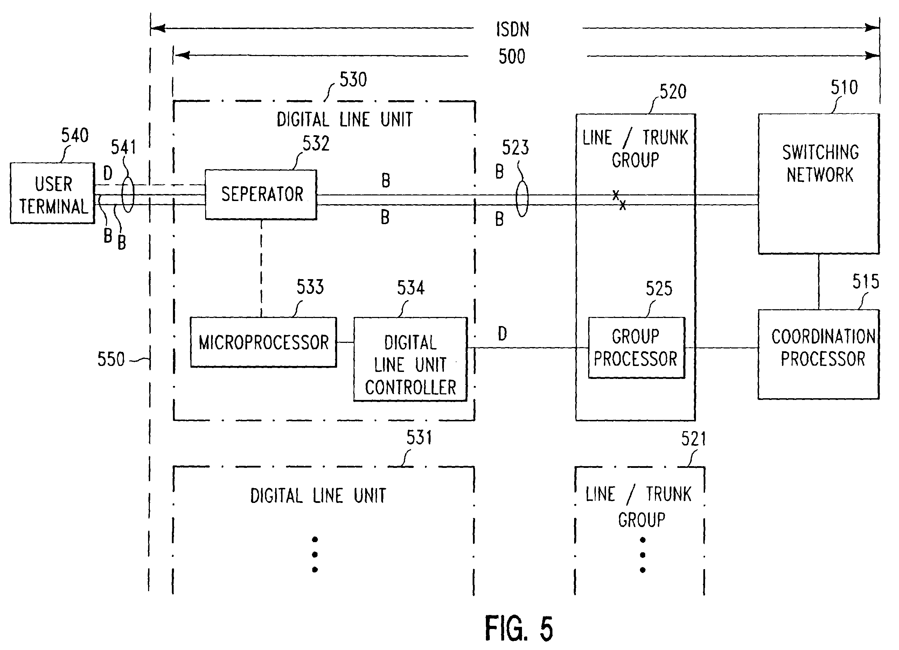

Many commercially available digital switching systems provide ISDN capability as part of their basic architecture. One such commercially available system is the EWSD switching system available from the Siemens AG. For purposes of the present invention, only a high-level description is required to set forth a context for an illustrative embodiment of the present invention which will be discussed below. Such a high-level block diagram of the EWSD architecture arranged with ISDN is shown in FIG. 5. System 500 is composed of a limited number of loosely coupled subsystems which are each largely self-sufficient. Switching network 510 is the primary interconnection point to all the subsystems. Switching network 510 is composed of both time and space stages and it is virtually non-blocking. Coordination processor 515 is responsible for total system integrity as well as a part of call processing. Processor 515 does only those parts of the call processing functions which are naturally performed best by a centralized controller. These functions include switching network 510 path set up, final translation and routing and general call control coordination. All other call processing functions like signaling, digit collection and feature handling are done in line/trunk group 520. Line/truck group 520 is the subsystem which terminates numerous digital line carriers on both its incoming (523) and outgoing (522) ports. Group processor 525 in line/trunk group 520 manages all the control functions of this subsystem. Digital line unit 530 performs a concentration function and terminates a number of incoming BRIs exemplified by BRI 541. Digital line unit controller 534 provides for communication between digital line unit 530 and line/trunk group 520. Separator 532 of unit 530 handles the three layers of the D-channel and effects separation of the D- and B-channels. Microprocessor 533 handles D-channel protocol signaling and packages the protocol information into an internal format which, in turn, is made available to group processor 525 to control line/truck group 520 and is also made available to switching network 510 for switching activity. Line/trunk group 520 and digital line unit 530 may be replicated as needed (e.g. group 521 and line unit 531) to satisfy system capacity requirements. ISDN for this illustrative arrangement encompasses both system 500 as well as exemplary ISDN interface 550.

### EKTS Properties and Features in an ISDN Environment

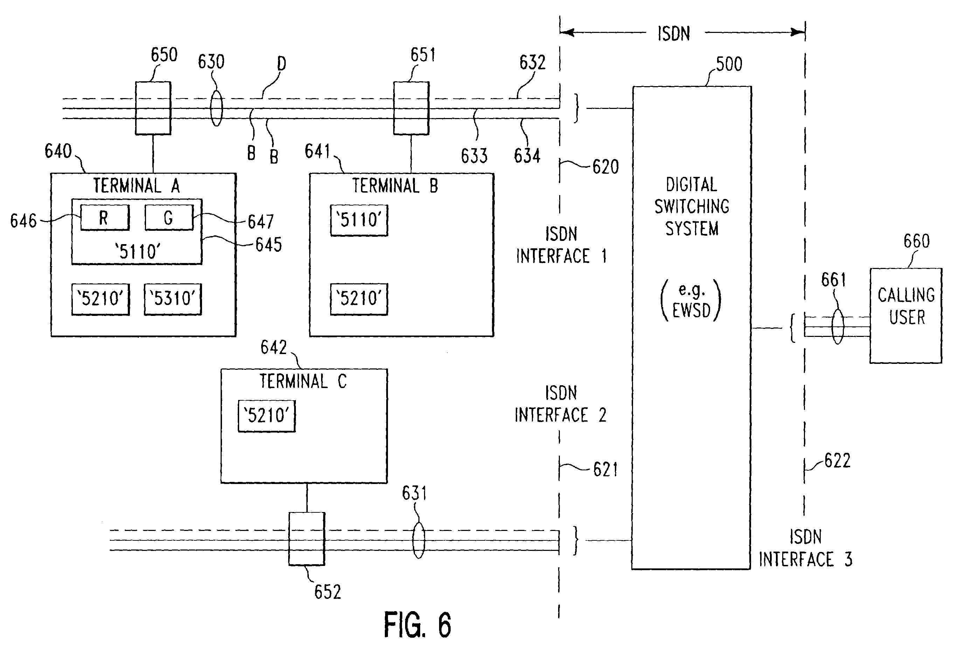

Electronic Key Telephone Service (EKTS) allows a user served by an ISDN interface to have access to multiple directory numbers, referred to as DNs. Moreover, a given DN can also be accessed by more than one user, i.e., from more than one user equipment, on the same ISDN interface and/or different interfaces. In addition, two or more users with access to the same DN can be simultaneously bridged onto the same call established for that DN. These features are illustrated in FIG. 6, which is essentially the architecture of FIG. 5 recast for particular discussion of the EKTS features. FIG. 6 depicts system 600 having digital switching system 500 (see FIG. 5) serving three ISDN interfaces 620-622. Interface 620 provides basic rate interface (BRI) 630 to user terminals 640 and 641, whereas interface 621 provides BRI 631 to user terminal 642 and interface 622 provides BRI 661 to calling user 660. Terminal 640 is coupled to BRI 630 via connector 650 (e.g. NT1/NT2), and terminal 641 is coupled to BRI 630 via connector 651 (e.g. NT1/NT2). Terminal 642 has connector 652 (e.g. NT1/NT2) as the coupling mechanism to BRI 631. (Each BRI 630 or 631 is depicted as being composed of a (dashed line) D-channel (e.g. 632) and two (solid line) B-channels (e.g., 633 and 634)). Terminal 640 is depicted for illustrative purposes as having three DN appearances, namely, '5110', '5210' and '5310', whereas terminal 641 has two DN appearances '5110' and '5210', with terminal 642 having only DN '5210' as an appearance. Such DNs usually have a push-button key appearance on the face of the terminal, as exemplified by key 645 on terminal 640; oftentimes, colored lights may be displayed through translucent panels formed integral to the key so as to provide alerting functions to the user -- such panels are shown as 'red' (R) display panel 646 and 'green' (G) display panel 647 formed as part of key 645.

As alluded to above, users of all terminals have access to directory number '5210', users of terminals 640 and 641 have access to DN '5110', and only terminal 640 has the appearance of DN '5310' (one or more other terminals, not shown, presumably have appearances of '5310' 50 '5310' is a true DN, that is, has multiple appearances). In one of the operational modes provided by system 600, a user of terminal 640, 641, or 642 (say terminal 640) may initiate an outgoing call to a called user outside of EKTS by pushing the appropriate DN key, say DN '5210'. The calling EKTS telephone provides status information to the calling user, such as steady red and green key panel lights on key 645 when the call is established. The other two terminals (641 and 642) are alerted to the ongoing activity by an appropriate alerting signal, such as a steady red key panel light on its DN '5210' appearance. Such an indication will remain in effect during the remainder of the call connection for the non-participating terminals 641 and 642.

In another operational mode provided by system 600, if calling user 660 initiates a call to DN '5210' through digital switching system 500, then each user of terminals 640-642 receives an alerting signal (such as both a ringing signal and a blinking red panel light on key '5210') to indicate that there is an incoming call on each appearance of DN '5210'. Typically, once access is granted to one of the users, that is, one of the users answers the incoming call at one terminal (e.g. terminal 640), the remaining two users (terminals 641 and 642) receive an indication that the DN is active (such as a steady red panel light), while the answering terminal 640 will have another status indicator (such as steady red and green panel lights). The signaling to establish the connection between calling user 660 and terminals 640-642 is conveyed by both D-channels 632 and 635; once a connection is established between calling user 660 and called user of terminal 640, the users communicate over a B-channel, such as channel 633. More details pertaining to the set-up of this call will be covered shortly.

During an established connection between a calling user and a called user such as just described, it is possible for another user having access to the active DN to bridge onto the call. For instance, the user of terminal 641 may bridge onto the call established between calling user 660 and terminal 640 merely by pushing the key associated with DN '5210'; prior to pushing the key, there is a steady red light indicator, and after the key is pushed, both steady red and green lights appear on the key panels of the bridging user's DN '5210'. It is possible at this time for the original called user of terminal 640 to disconnect from the established connection by again pushing the '5210' DN key, which turns off the green light but maintains the red light on the key panel as an indication of the remaining established connection.

The description of the EKTS features to this point has been purposely general in nature so that the essentials of the features could be presented before any further complexities are introduced. The complexities involve the ISDN signaling messages which are propagated over the D-channels of the various BRIs comprising an ISDN service offering to set-up, bridge, or take-down a call. (A suitable reference covering EKTS features in an ISDN environment is the Technical Reference TR-TSY-000205 entitled "ISDN Electronic Key Telephone Service", Issue 1, December 1988, published by Bellcore.)

As outlined above, a fundamental capability of EKTS is the ability to allow different users each to have a terminal appearance of a given DN. To support this capability, the EKTS terminal supports certain D-channel signaling messages not present in a more basic ISDN offering. For instance, with reference to FIG. 6, when calling user 660 directs a call to a DN (e.g., '5210'), the call is offered to each terminal 640-642 with a 'SETUP' message; this message is composed of the called party DN, bearer information to be used by the terminals for compatibility checking, and the type of alerting to be applied, as conveyed by the various layers depicted in FIG. 4. When the call is answered by a called user (e.g. terminal 640), all other terminals will receive a 'KEY HOLD' message. This 'KEY HOLD' message is interpreted by each of the other terminals as notification that the call has been answered by another user, that is, the call is no longer alerting.

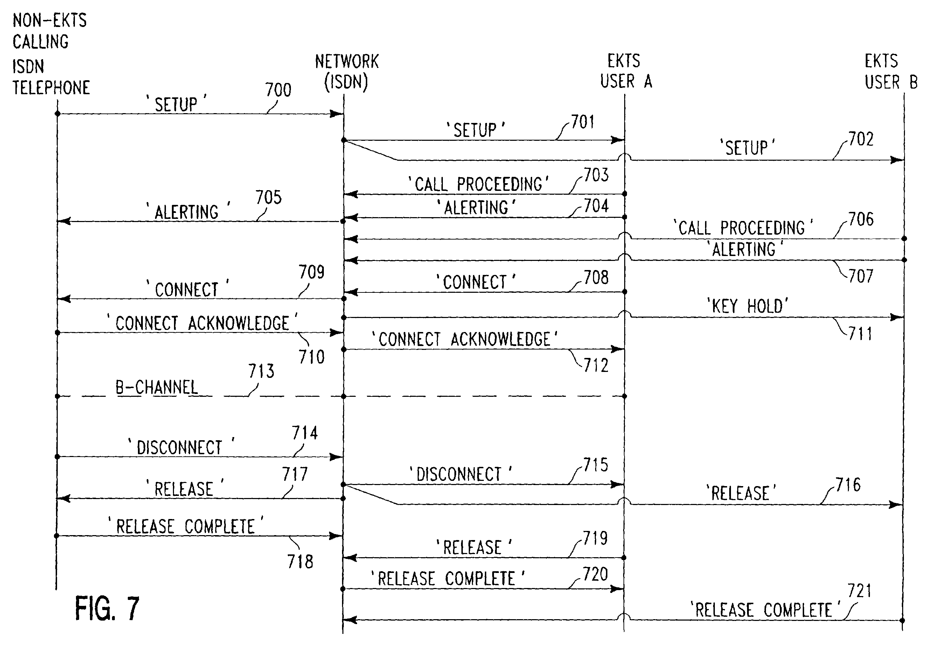

A more explicit depiction of the signaling messages transmitted by a system exemplified by FIG. 6 are shown in FIG. 7, which is a pictorial representation of the ISDN user-network protocol to set-up a call between a calling user outside EKTS and a called user served by EKTS. FIG. 7 is commensurate with FIG. 2 for comparison purposes to distinguish a non-EKTS service with an EKTS service in an ISDN environment. It should be noted however, for conciseness, that the actions (such as "pick up handset") of the calling user and called user, as explicitly shown in FIG. 2, have not been shown in FIG. 7; one skilled in the art may readily comprehend the actions now required of the users in FIG. 7 given the discussion of FIG. 2. With reference to FIG. 7, the non-EKTS calling ISDN telephone transmits a 'SETUP' message (arrow 700) to the network. In turn, the network sends 'SETUP' messages (arrows 701 and 702) to EKTS users A and B (say terminals 640 and 641 in FIG. 6; terminal 642 is ignored in this discussion for brevity). Both users A and B respond with the standard 'CALL PROCEEDING' and 'ALERTING' messages (arrows 703,706 and 704,707, respectively). In addition, 'ALERTING' message 705 is sent from the network to the calling ISDN telephone. It is supposed that user A answers the incoming EKTS call, so that a 'CONNECT' message (arrow 708) is transmitted from EKTS user A to the network. The network responds by sending a 'CONNECT' message (arrow 709) to the calling ISDN telephone. Moreover, the network sends a 'KEY HOLD' message (arrow 711) to EKTS user B to signal the fact that another user on EKTS has answered the call. Upon the 'CONNECT ACKNOWLEDGE' messages (arrows 710 and 712) provided by the calling ISDN telephone and the network, respectively, the B-channel (dashed line 713) between the calling ISDN telephone and EKTS user A is established.

Continuing with the description of FIG. 7 (which is now to be contrasted with FIG. 3), it is now supposed that the calling ISDN telephone terminates the call; this leads to a 'DISCONNECT' message (arrow 714) being transmitted to the network. The network responds by sending a 'DISCONNECT' message (arrow 715) to the active EKTS user A and a 'RELEASE' message (arrow 716) to the non-participating EKTS user B. In addition, a 'RELEASE' message (arrow 717) is sent from the network to the calling ISDN telephone. Both the calling ISDN telephone and EKTS user B respond by sending 'RELEASE COMPLETE' messages (arrows 718 and 721, respectively) to the network; on the other hand, the network sends a 'RELEASE' message (arrow 719) and awaits a 'RELEASE COMPLETE' message (arrow 720) to thereby complete the take-down of the established call.

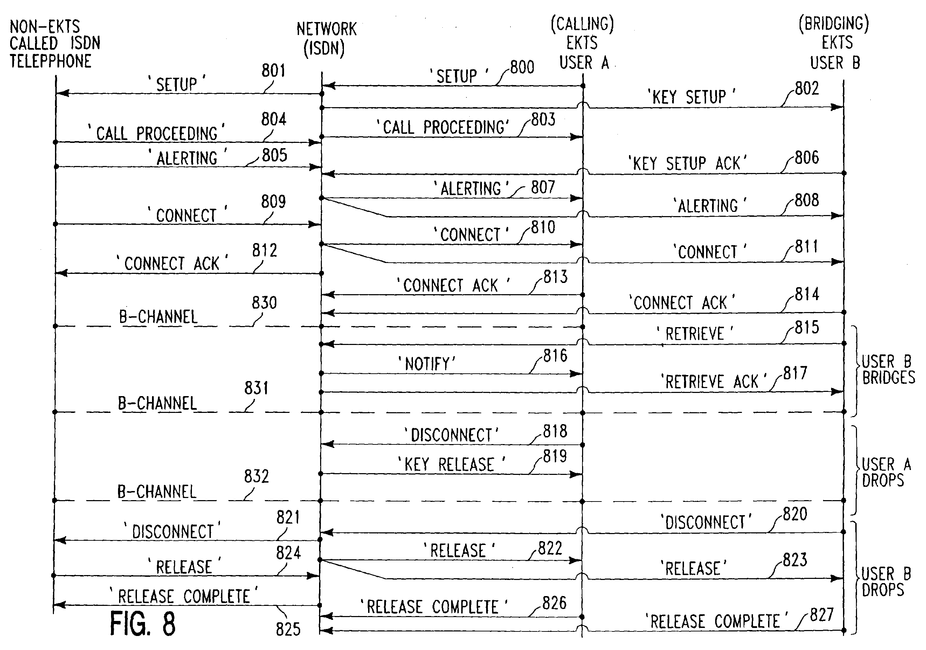

To further discern refinements to ISDN fostered by EKTS, reference is now made to FIG. 8, which is a pictorial representation of the ISDN user-network protocol setting-up a call to a called user outside EKTS from a calling user served by EKTS, then the bridging of another user served by EKTS onto the established call, and finally the dropping off of the original calling user from the established call. The process is initiated by the calling terminal of EKTS user A sending a 'SETUP' message (arrow 800) to the network. As expected, the network responds by sending a 'SETUP' message (arrow 801) to the called ISDN telephone; also, the network responds to the original 'SETUP' message by conveying a 'KEY SETUP' message (arrow 802) to EKTS user B. The network sends the 'CALL PROCEEDING' message (arrow 803) to calling EKTS user A. The called ISDN telephone responds with the usual 'CALL PROCEEDING' and 'ALERTING' messages (arrows 804 and 805). In the meantime, EKTS user B responds with a 'KEY SETUP ACKnowledge' message (arrow 806) to inform the network that the earlier 'KEY SETUP' message was received. 'ALERTING' messages (arrows 807 and 808) are sent from the network to both EKTS users A and B. When the called ISDN telephone answers, a 'CONNECT' message (arrow 809) is conveyed to the network; in turn, the network sends 'CONNECT' messages (arrows 810 and 811) to EKTS users A and B, respectively. 'CONNECT ACKnowledge' messages (arrows 812, 813, and 814) are appropriately transmitted from the network or to the network, as needed. With the set-up cycle complete, a B-channel (dashed line 830) is established between the called ISDN telephone and the calling EKTS user A.

With the call established, EKTS user B is aware of the established call via an appropriate indicator such as a panel key light, and EKTS user B may desire to bridge onto the established call. For example, EKTS user B may push the DN key of the established call; this results in a 'RETRIEVE' message (arrow 815) being sent to the network to indicate user B's desire to bridge onto the established call. The network responds by, first, sending a 'NOTIFY' message (arrow 816) to EKTS user A to indicate the fact that another EKTS party is entering the established connection, and secondly, the network sends a 'RETRIEVE ACKnowledge' message (arrow 817) to EKTS user B to inform this user that bridging will occur. As depicted (dashed line 831), a B-channel then is arranged to link both users A and B with the called ISDN telephone.

If EKTS user A now wishes to drop from the established call, a 'DISCONNECT' message (arrow 818) is transmitted to the network by EKTS user A. The network responds by sending a 'KEY RELEASE' message (arrow 819) to EKTS user A to inform this user that its B-channel connection will be dropped (as depicted now by dashed line 832 connecting only EKTS user B with the called ISDN telephone).

Finally, since only EKTS user B is on the established call from the perspective of EKTS, if user B disconnects, then the call is to be terminated. This is shown by the 'DISCONNECT' message (arrow 820) being transmitted from EKTS user B to the network. In turn, a 'DISCONNECT' message (arrow 814) is sent to the called ISDN telephone by the network; moreover, the network sends 'RELEASE' messages (arrows 822 and 823) to EKTS users A and B, respectively. The called ISDN telephone responds to its 'DISCONNECT' message with a 'RELEASE' message (arrow 824) to the network. To complete the termination procedure and take down of the B-channel, both EKTS users A and B respond to the network with 'RELEASE COMPLETE' messages (arrows 826 and 827, respectively).

### EMBODIMENT OF THE PRESENT INVENTION

The description in the foregoing overview of ISDN has elucidated the fundamental circuit arrangements, protocols, and operational principles which will facilitate the description of the various aspects of the present invention. Of especial importance is the fact that the illustrative embodiments of the present invention take advantage of these presently existing arrangements, protocols, and principles of ISDN and EKTS technology to engender a cellular mobile service.

There are three major areas of service provisioning for any cellular mobile service, namely: (1) setting-up a call from a handset to a called party and maintaining this connection; (2) setting-up a call to a handset from a calling party and maintaining this connection; and (3) once a connection has been established, providing for a "seamless" handoff of the stable call as the user of a handset moves from one cell to another.

### (1) Calling Handset to Called User

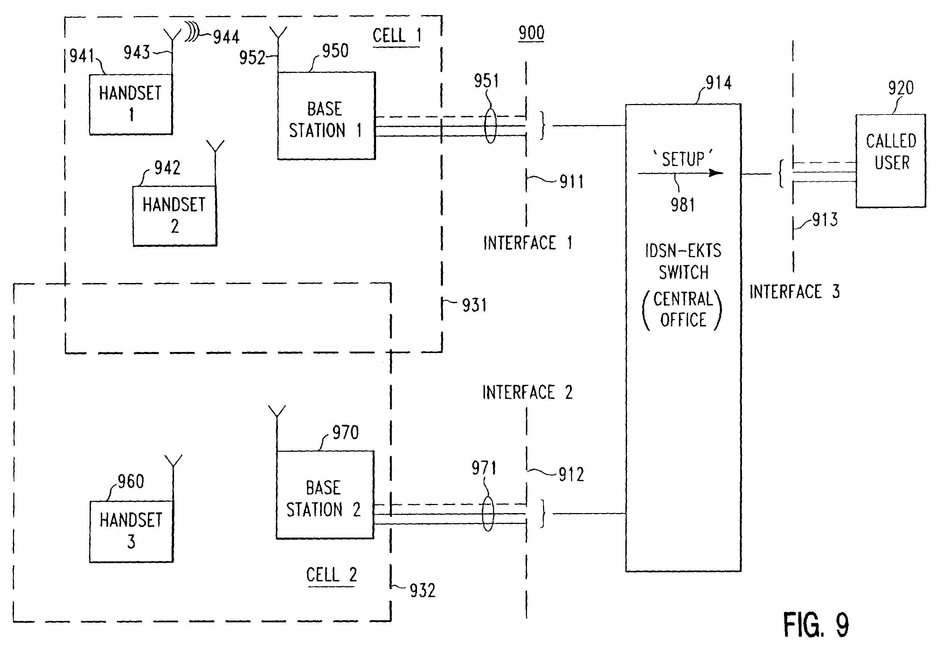

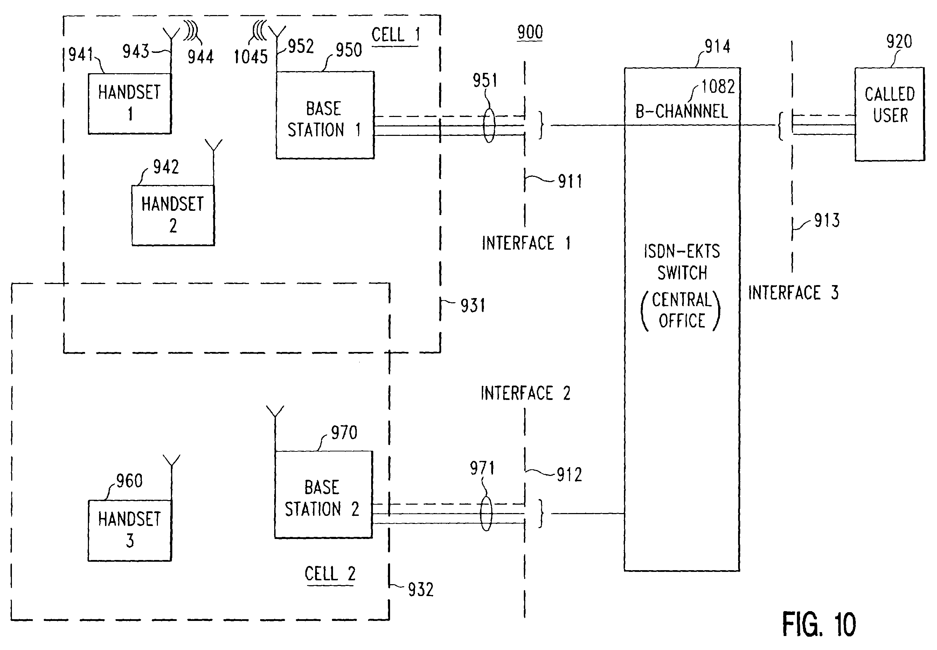

The first of these major areas is addressed initially with reference to FIGS. 9 and 10. Referring to FIG. 9, there is shown cellular system 900 which is composed of: an ISDN encompassing ISDN-EKTS switch 914 (e.g. system 500 of FIG. 5) and ISDN interfaces 911, 912 and 913; base stations 950 and 970, with base station 950 serving mobile handsets 941 and 942, respectively, within cell 931, and wherein base station 970 serves handset 960 within cell 932; and called user 920 connected to interface 913. In addition, base station 950 is connected to interface 911 via BRI 951, whereas base station 970 is connected to interface 912 with BRI 971. These base stations represent an additional type of terminal equipment in the category of an ISDN telephone, TV, or EKTS terminal. In fact, as will become apparent shortly, each base station is configured so that the port connected to the basic rate interface is implemented to process the EKTS features elaborated upon earlier. In addition, a second base station port functions in the conventional cellular sense as a transmitter/receiver ("transceiver") of wireless signals.

As demonstrated by FIG. 9, system 900 and the concomitant methodology corresponding to the operation of system 900 utilize at least one ISDN BRI (951,971) and at least one ISDN interface (911,912) to serve base stations 950 and 970. Each cellular mobile user, such as handset 941, 942, or 960, is assigned a unique EKTS directory number (DN). For the postulated cellular mobile application, all base stations for this application are connected, via interposed ISDN interfaces, to single switch 914 (also referred to as the central office (CO) hereinafter). CO 914 treats base stations homing on it as ISDN-EKTS terminals each of which serves all DNs for the given cellular mobile communication application, that is, all DNs appear at all base stations.

The following sequence of steps occurs to complete an outgoing call from a cellular mobile user; for illustrative purposes, it is presumed handset 941 desires to set-up a call:
(a) handset 941 transmits a radio signal, depicted by reference numeral 944, from its antenna 943 to antenna 952 of base station 950. This radio signal conveys the DN assigned to handset 941 as well as the telephone number of called user 920 (for this call initiation activity, it is known that base station 950 and handset 941 can interact directly with EKTS DNs);
(b) base station 950 converts this request for call-set up to the ISDN format, that is, a 'SETUP' message is sent from base station 950 to CO 914 and, in turn, another 'SETUP' message is sent from CO 914 to called user 920 -- the combined effect of these two signaling messages is depicted by 'SETUP' message 981 emanating from interface 911 [the manner of presenting the protocol information in FIG. 9 is a shorthand form that differs from the previous illustrative manner of showing protocol information of FIGS 2, 3, 7, and 8. The shorthand form can be used both because of the teachings of the detailed discussion of the protocol flow in the Overview section, and because of the insight gained by overlaying the protocol step on the circuit arrangement which is carrying out the protocol step. It should be noted that 'SETUP' summarized by message 981 is commensurate with the two 'SETUP' messages (arrows 801 and 802) of FIG. 8, and in fact the sequence of signaling messages carried out by system 900 to set-up a call from handset 941 to called user 920 tracks the set-up of a call from EKTS user A to called ISDN telephone discussed with respect to FIG. 8];
(c) as discussed previously with respect to FIG. 8,
   -- CO 914 receives 'CALL PROCEEDING' and 'ALERTING' messages from called user 920,
   -- CO 914 transmits 'CALL PROCEEDING' and 'ALERTING' messages to base station 950, and
   -- base station 970 receives a 'KEY SETUP' message and returns a 'KEY SETUP ACKnowlege' message; and (d) once called user 920 answers the incoming call, a B-channel is established between base station 951 and called user 920 after the following series of 'CONNECT' and 'CONNECT ACKnowledge' messages is passed:
   -- called user 920 transmits a 'CONNECT' message to CO 914 which responds with a 'CONNECT ACKnowlege' message, and
   -- CO 914 sends 'CONNECT' messages to both base station 950 and 970, and each base station responds with a 'CONNECT ACKnowlege' message.

The arrangement of FIG. 10 depicts that the established call between handset 941 and called user 920 utilizes B-channel 1082. The two-way nature of the communication channel between base station 950 and handset 941 is depicted at base station 950 by transmitted signal 1045 propagated from antenna 952 for reception by antenna 943 of handset 941.

The description of this immediate section has assumed that base station 950 can address handset 941 directly with the ISDN DN or extension. Oftentimes, a base station may use a terminal identifier other than an EKTS DN to address the handsets, and the terminal identifier of the calling handset must be translated to an EKTS DN or extension. This translation may be accomplished by the base station or, optionally, by central office 914 in this illustrative case. If the central office does the translation, then the terminal identifier of the originating handset can be passed to the central office using an appropriate sub-field in the information fields of layer 3 (e.g. fields 430 of FIG. 4). Also, the description of these steps presumed an ISDN-based EKTS arrangement for establishing the call set-up from the cellular calling user to the called user. It is also apparent from the immediate discussion that only standard or regular D-channel signaling messages are utilized in this service provisioning application between the calling and called users, so it appears as if it may be possible to configure the base stations with only standard ISDN signaling messages rather than both the regular ISDN and the supplementary EKTS signaling messages. It is noted, however, that there are ancillary activities that occur with respect to other base stations not directly in the final communication connection (such as a 'KEY SETUP' being received by base station 970). These ancillary activities allow for handoffs, as discussed below. Thus, an ISDN-only based implementation is somewhat restricted in that the cellular mobile calling user is confined to an initially assigned cell and handoffs will not be feasible.

### (2) Calling User to Called Handset

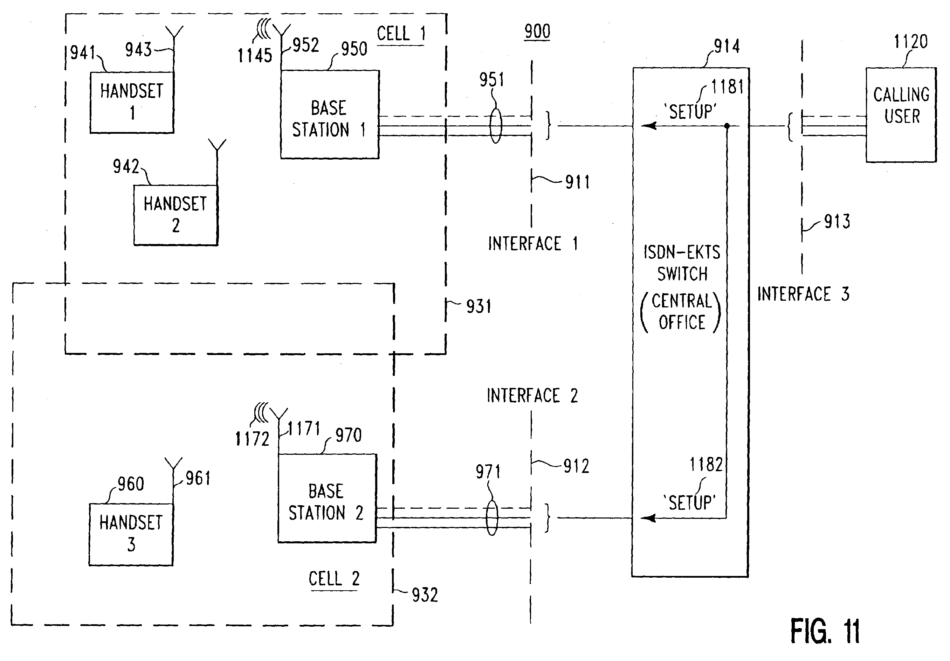

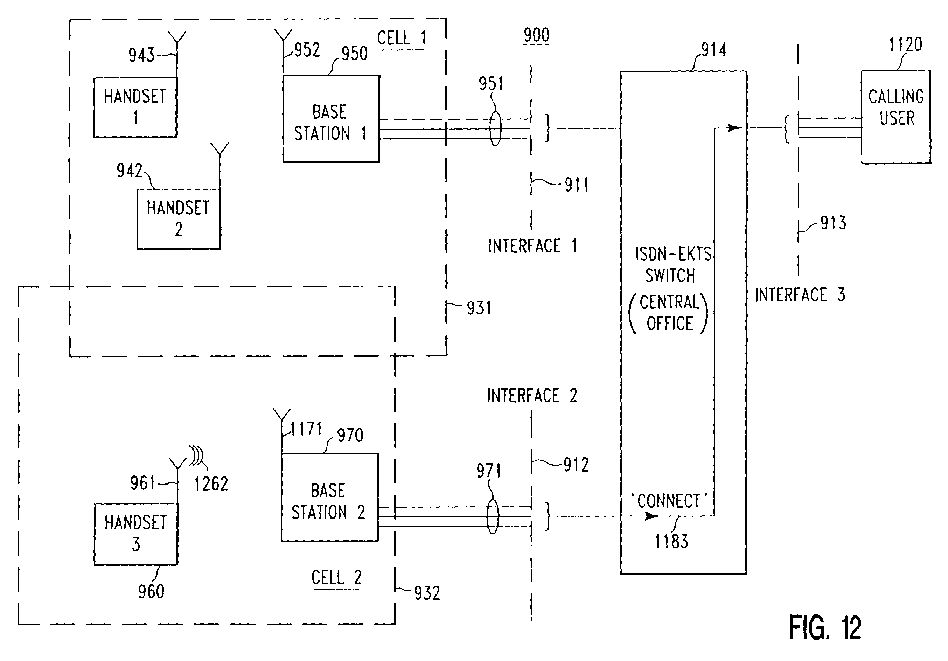

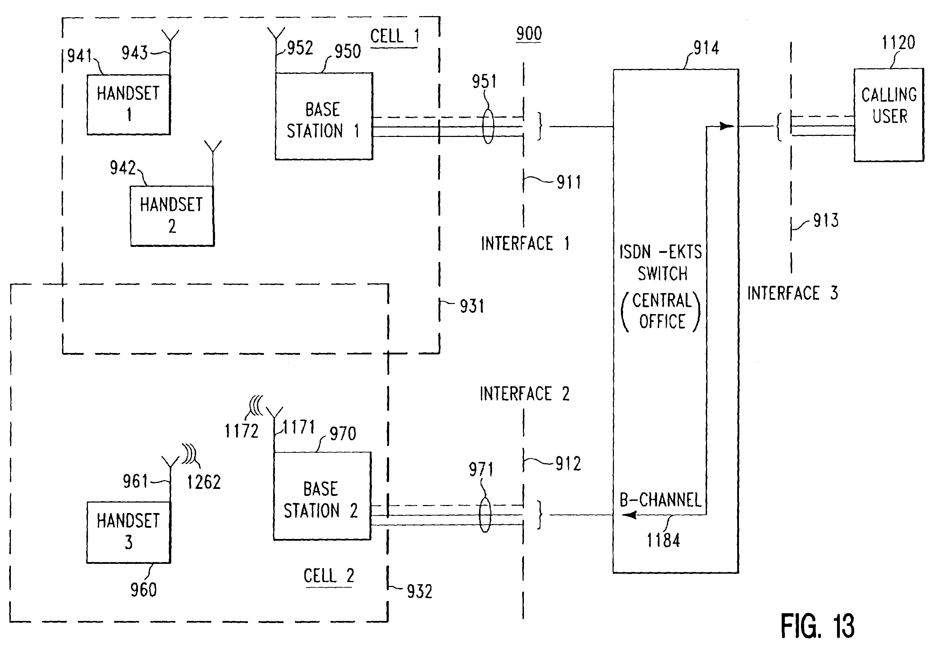

The second of the major service provisioning areas is addressed with reference to the sequence of FIGS. 11, 12, and 13. Referring to FIG. 11, there is again shown basic system 900 as originally depicted in FIG. 9. The primary difference between FIG. 11 compared to FIG. 9 is that the incoming calling user 1120 initiates a call set-up to a cellular mobile user, say handset 960 for discussion purposes. The following sequence of steps occurs to complete this call set-up (this sequence of steps is commensurate with the steps described in detail with respect to FIG. 7 in setting up a B-channel between a calling ISDN telephone and EKTS user A -- accordingly, the following sequence may be set forth with some brevity due to these previous teachings):
(a) calling user 1120 transmits a 'SETUP' message including the called user DN to CO 914;
(b) CO 914 responds by sending 'SETUP' messages 1181 and 1182 to base stations 950 and 970 via interfaces 911 and 912, respectively;
(c) base station 950 broadcasts the call attempt by propagating radio signal 1145 over antenna 952; similarly, base station 970 broadcasts the call attempt by propagating radio signal 1172 over antenna 1171;
(d) since it is presumed that handset 960 is assigned the called DN, handset 960 answers the call, referring now to FIG. 12, by propagating radio signal 1262 from antenna 961 (in terms of a layer 3 signaling message, this activity produces 'CONNECT' message 1183 being transmitted from base station 950, via CO 914, to calling user 1120); and
(e) with reference to FIG. 13, after suitable 'CONNECT ACKNOWLEDGE' and 'KEY HOLD' messages have been interchanged (see FIG. 7), B-channel 1184 interconnects handset 960 to calling user 1120 -- the two-way nature of the established call is indicated in FIG. 13 by the two radio signals 1262 and 1172 emanating from handset 960 and base station 970, respectively.

The description of this immediate section has assumed that base station 970 can address handset 960 directly with the ISDN DN or extension. As already indicated above, oftentimes the base station may use a terminal identifier other than an EKTS DN to address the handsets, and the terminal identifier of the calling handset must be translated to an EKTS DN or extension. This translation may be accomplished by the base station or, optionally, by central office 914 in this illustrative case. If the central office does the translation, then the terminal identifier of the originating handset can be passed to the central office using an appropriate sub-field in the information fields of layer 3 (e.g. fields 430 of FIG. 4).

### (3) Handoff of a Stable Call

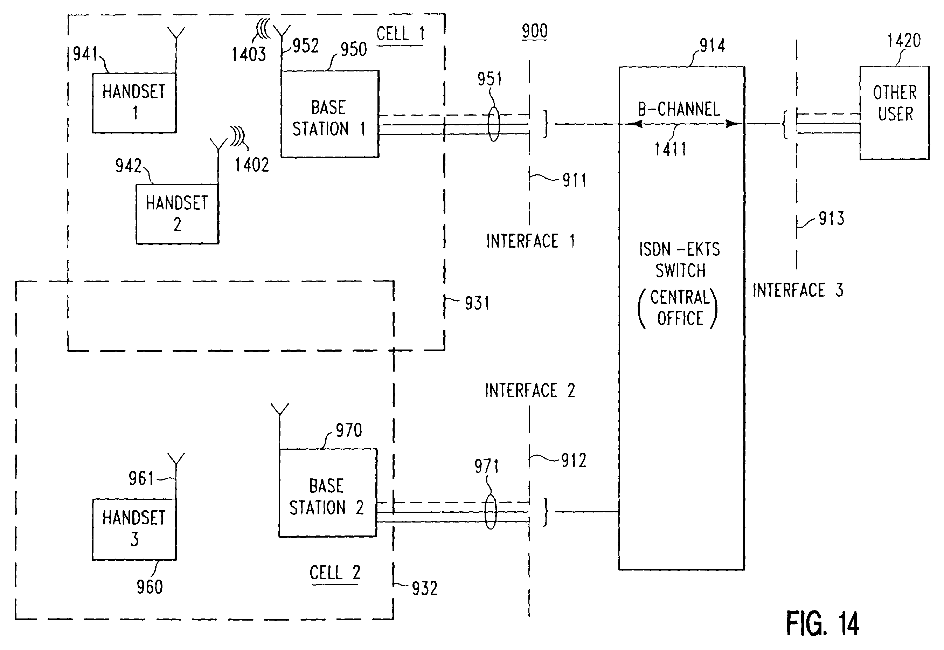

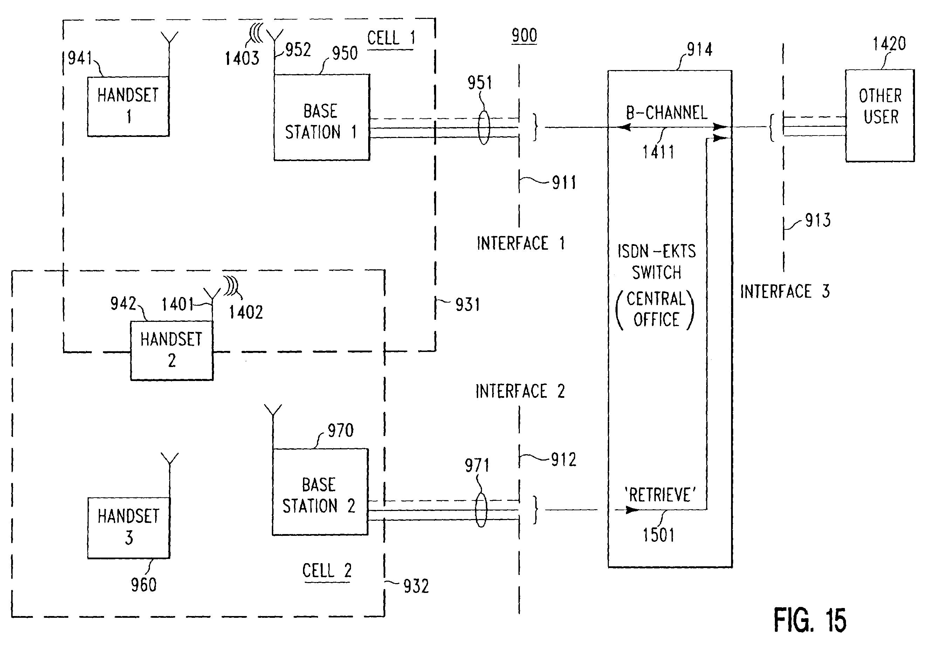

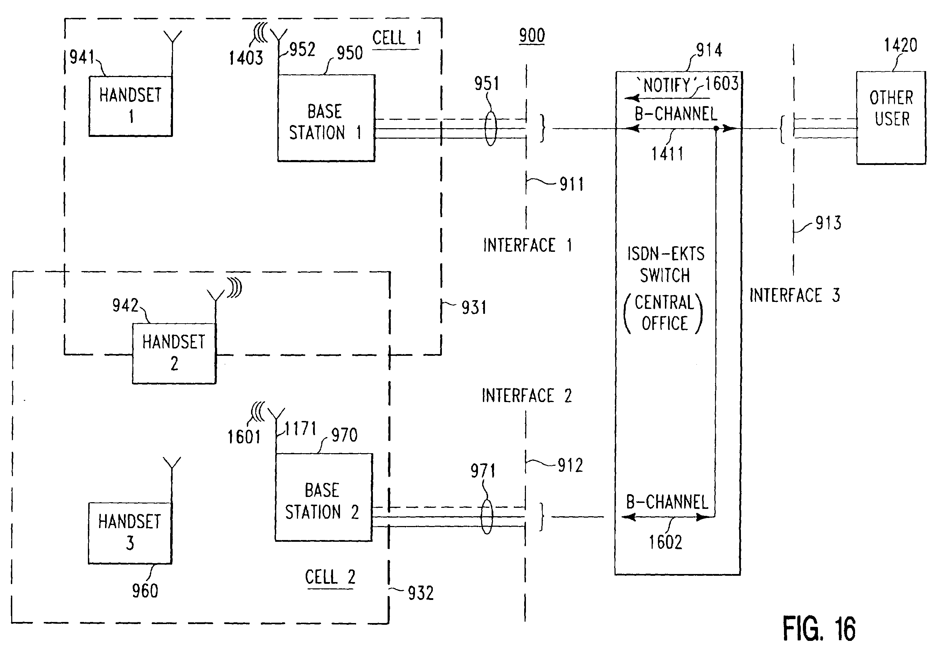

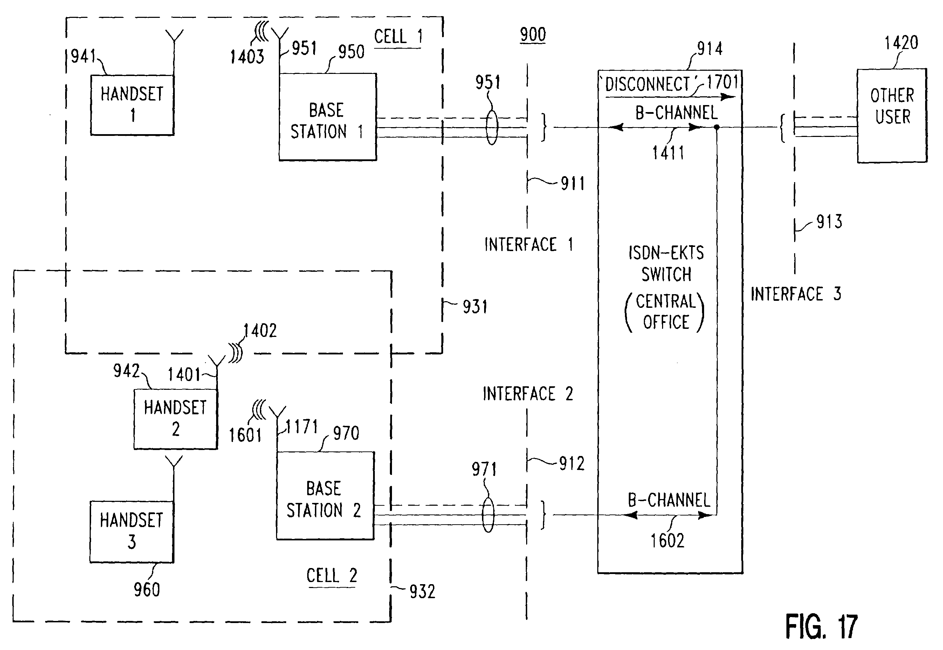

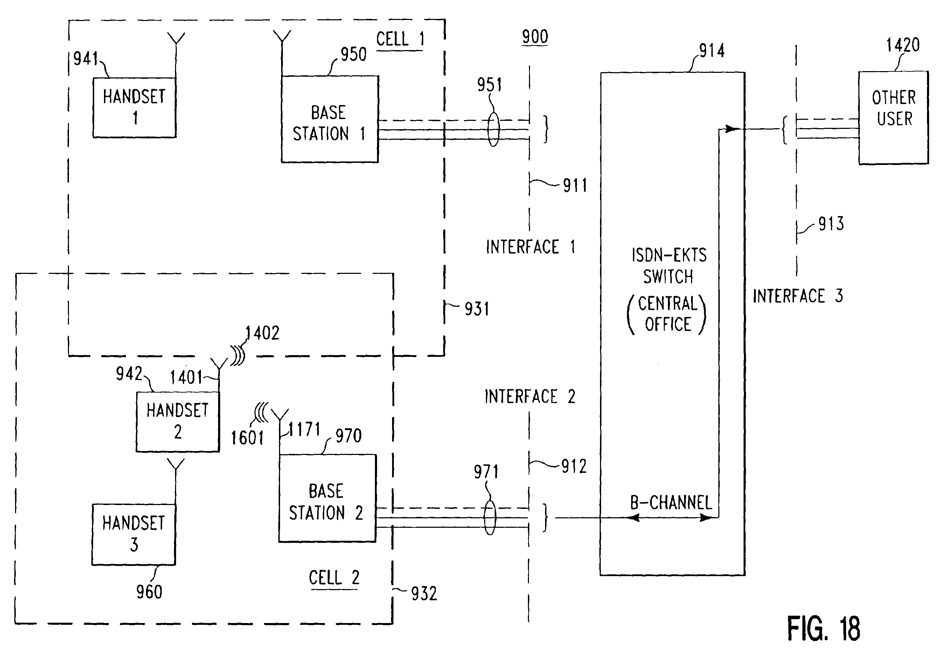

The final major service provisioning area is the arrangement for handing off a call from one base station to another as the cellular mobile user crosses from an original cell to a secondary cell. This aspect of the invention is presented with reference to FIGS. 14-18. Referring now to FIG. 14, there is shown again basic system 900 as originally depicted in FIG. 9. As is depicted in FIG. 14, the starting point for the immediate discussion is the presumption that a stable communication connection over a B-channel has been established between a cellular mobile user and another user -- as illustrated, B-channel 1411 connects handset 942 and other user 1420. The communication connection may have been established by the procedure discussed in either of the two preceding sections on service provisioning. The following sequence of steps occurs to maintain the communication connection as handset 942 migrates from cell 931 to cell 932 (this sequence of steps is commensurate with the steps described in detail with respect to FIG. 8, with special emphasis on the bridging procedures associated with user B bridging onto the call, and then user A dropping off the call -- accordingly, the following sequence may be set forth with some brevity due to these previous teachings):
(a) initially, base station 950 transceives with handset 942 to provide B-channel 1411 information both to and from handset 942. However, recall from FIG. 8 that during D-channel set-up of the B-channel, the other EKTS appearances of each DN (all DNs appear at all base stations) have cycled through a sequence of 'KEY SETUP', 'KEY SETUP ACKnowledge', 'CONNECT', and 'CONNECT ACKnowledge' messages, and each DN is, is essence, in a standby mode and is available to be bridged;
(b) with reference now to FIG. 15, when handset 942 migrates to a region encompassed by both cell 931 and 932, that is, the overlap of cell 931 with cell 932, base station 970 detects the radio signal propagated by handset 942 and base station 970 then generates a request to switch 914 to bridge onto the call for the DN associated with handset 942. This desired activity is shown by 'RETRIEVE' signaling message 1501 being issued over the D-channel of BRI 971;
(c) with reference now to FIG. 16, base station 950 receives 'NOTIFY' signaling message 1603 as a result of the previous 'RETRIEVE' signaling message, and B-channel 1602 of BRI 971 is bridged onto the call. Now handset 942 receives radio signal 1403 from base station 950, and duplicative radio signal 1601 from base station 970, as B-channel information. Base station 950 also interprets this 'NOTIFY' message as an indication that handset 942 has migrated from the original cell 931 to the secondary cell 932, and that the base station associated with the secondary cell desires to take control of the communication connection;
(d) with reference now to FIG. 17, base station 950 issues 'DISCONNECT' message 1701 over the D-channel of BRI 951 to drop B-channel 1411 and place base station 950 in standby mode; and
(e) finally, with reference to FIG. 18, after base station 950 drops its B-channel, only B-channel 1602 in BRI 971 associated with base station 970 remains as the communication connection between handset 942 and other user 1420. Now, only radio signal 1402 is detected by antenna 1171 of base station 970, and handset 942 receives only radio signal 1601 from base station 970.

The description of this immediate section has assumed that base stations 950 and 970 can address handset 942 directly with the ISDN DN or extension. As already indicated above, oftentimes the base stations may use a terminal identifier other than the EKTS DN to address the handsets, and the terminal identifier of the calling handset must be translated to an EKTS DN or extension. This translation may be accomplished by the base station or, optionally, by central office 914 in this illustrative case. If the central office does the translation, then the terminal identifier of the originating handset can be passed to the central office using an appropriate sub-field in the information fields of layer 3 (e.g. fields 430 of FIG. 4).

### Base Station Circuitry

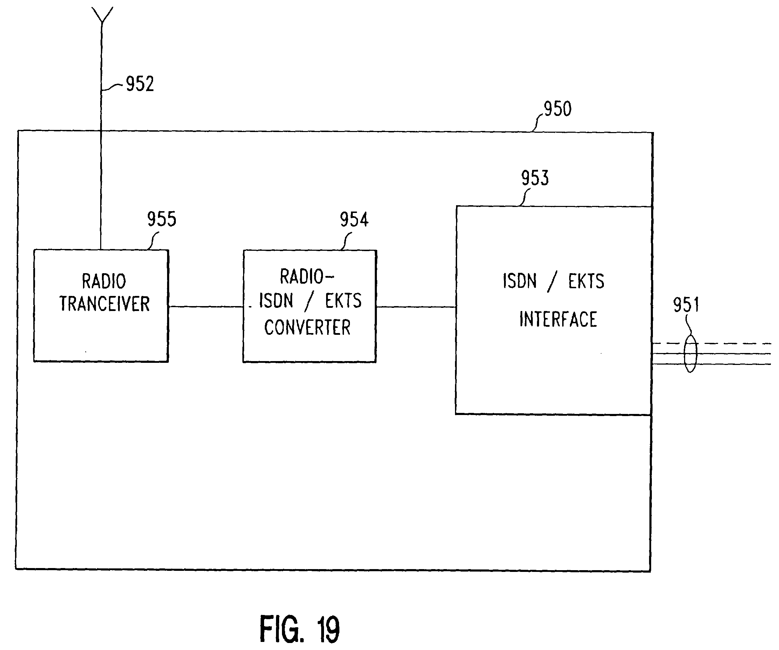

In the discussion of FIGS. 9-18, the functions required of base station 950 or 970 have been set forth with some generality. To complete the detailed description, FIG. 19 depicts a high-level block diagram of an illustrative arrangement of a base station (say base station 950) to provide the required functionality. In FIG. 19, base station 950 is composed of radio transceiver 955, with associated antenna 952, ISDN-EKTS interface 953, and interposed radio-ISDN/EKTS converter 954. Radio transceiver 955 serves as a radio port to both receive incoming radio signals from the cellular mobiles users and transmit outgoing radio signals from the base station. Interface 953 serves as a termination port for BRI 951. Since information arriving on the D- and B-channels of BRI 951 is digital in nature, and radio signals are generally analog in nature and appear at an allocated region of the frequency spectrum, converter 940 serves to convert the digital information from interface 953 to commensurate radio signals for transceiver 955 and vice versa.

### PCS Environment

In a conventional cellular system as described to this point, the movement of a handset is detected by the base station tracking the location of the handset. However, for PCS, the tracking is effected by the handset, that is, the handset is arranged with circuitry and appropriate logic to determine if and when a change of cells is required. This determination is accomplished by arranging each base station for continuous propagation of a cell identifier that informs the handsets within the cell of which base station serves that corresponding cell.

To further elaborate on how this determination is accomplished, it is important to understand that a PCS serving area or cellular region is served by a frequency spectrum, and this spectrum is subdivided into frequency bands. Each band serves a different base station so that neighboring cells will have different frequency bands. Within each band, a number of channels is provided via Time Division Multiplexing (TDM) and the channels are shared among all the handsets in a given cell. Each handset runs two on-going quality processes. The first process involves a quality check on the operating channel to determine the quality of the reception relative to a threshold. If the quality falls below a threshold, the handset will look for another channel within the band to switch to. If it finds one, a negotiation takes place between the handset and base station to effect a transfer of the present channel to a channel with better quality. The second process involves a quality check on the entire band. If the reception degrades to the point where the handset is receiving another base station signal with better quality as measured relative to a threshold, the given handset initiates a message in the band of the other base station to see if there is an open channel. If so, the handset emits an automatic link transfer command to have the latter base station switch the communication connection to the open channel. Thus, the handset monitors both quality cycles constantly and whenever the handset detects that there is a better band and channel available, the handset will request from the base station that owns the resources (band and channel) to change to that resource.

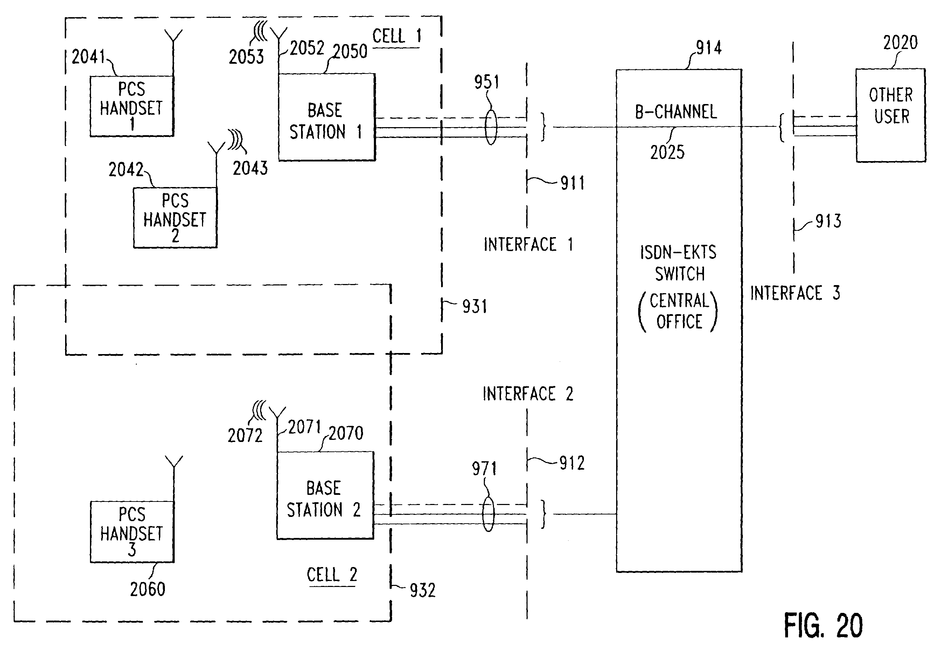

In accordance with the present invention, each DN is assigned to every base station so that every cell serves every DN. When a call is active, the communication connection is carried by one of the channels within a band. To further describe the PCS environment, reference is made to FIG. 20, which illustrates an established communication connection from PCS handset 2042 to other user 2020 over B-channel 2025. The primary difference between FIG. 20 and the previous FIGS. 9-18 resides in PCS handsets 2041, 2042 and 2060, and base stations 2050 and 2070. As discussed above, all base stations continuously emit a radio signal to enable the handsets to monitor the quality of the reception and negotiate a change of band or channel or both when the quality of the active band or channel degrades. This continuous signal propagation is depicted by signals 2053 and 2072 emitted from base stations 2050 and 2070, respectively. In the depiction of FIG. 20, PCS handset 2042 is transceiving with base station 2050 because, presumably, the quality of the band assigned to base station 2050 is acceptable at the moment, that is, is above a pre-determined quality threshold. As handset 2042 migrates toward base station 2070, that is, from cell 931 towards cell 932, then the quality of the reception in the band assigned to base station 2070 will, at some point, be better than the reception in the band assigned to base station 2050, and a handoff will occur. The sequence of D-channel messages and the final B-channel communication connection may be described in a manner similar to the description of FIGS. 14-18.

### Handoff of a Stable Call -- PCS

With reference to FIG. 20, the starting point for the immediate discussion is the presumption that a stable communication connection over a B-channel has been established between PCS handset and another user -- as illustrated, B-channel 2025 connects handset 2042 and other user 2020. The communication connection may have been established by a procedure similar to service provisioning for either incoming or outgoing calls described above. The following sequence of steps occurs to maintain the communication connection as handset 2042 migrates from cell 931 to cell 932 (this sequence of steps is commensurate with the steps described in detail with respect to FIG. 8 and FIGS. 14-18, with special emphasis on the bridging procedures associated with user B bridging onto the call, and then user A dropping off the call -- accordingly, the following sequence may be set forth with some brevity due to these previous teachings):
(a) initially, base station 2050 transceives with handset 2042 to provide B-channel 2025 information both to and from handset 2042. However, recall from FIG. 8 that during D-channel set-up of the B-channel, the other EKTS appearances of each DN (all DNs appear at all base stations) have cycled through a sequence of 'KEY SETUP', 'KEY SETUP ACKnowledge', 'CONNECT', and 'CONNECT ACKnowledge' messages, and each DN is, is essence, in a standby mode and is available to be bridged;
(b) when handset 2042 migrates to a region encompassed by both cell 931 and 932, that is, the overlap of cell 931 with cell 932, the radio signal propagated by base station 2070 is detected by handset 2042 and a quality process is executed by handset 2042 to determine if a request to transfer to base station 2070 is appropriate based on quality threshold comparisons. If it is determined that base station 2070 will provide a better quality communication connection, then handset 2042 emits a automatic link transfer command. This is interpreted by base station 2070 as a request to 'RETRIEVE' the call;
(c) base station 2050 receives a 'NOTIFY' signaling message as a result of the previous 'RETRIEVE' signaling message, and a B-channel of BRI 971 is bridged onto the call. Now handset 2042 receives radio signal 2053 from base station 2050, and duplicative radio signal 2072 from base station 2070, as B-channel information. In one implementation of the present invention, base station 2050 is instructed to interpret this 'NOTIFY' message as an indication that handset 2042 has migrated from the original cell 931 to the secondary cell 932, and that the base station associated with the secondary cell desires to take control of the communication connection;
(d) base station 2050 issues a 'DISCONNECT' message over the D-channel of BRI 951 to drop B-channel 2025 and place base station 2050 in standby mode; and
(e) after base station 2050 drops its B-channel, only a B-channel in BRI 971 associated with base station 2070 remains as the communication connection between handset 2042 and other user 2020.

Although various embodiments which incorporate the teachings of the present invention have been shown and described in detail herein, those skilled in the art can readily devise many other varied embodiments that still incorporate these teachings. For instance, since the environment of the present invention does not necessarily require the use of the public telephone network nor is it necessary to utilize a central office based switching network, one with ordinary skill in the art may now readily understand how the teachings of the present invention may be utilized in a Private Branch Exchange (PBX) environment since a PBX-based EKTS uses similar mechanisms to 'SETUP' broadcasts, 'RETRIEVE', 'NOTIFY', and so forth. Thus, to encompass public telephone network, CENTREX, and PBX uses of EKTS, the terminology "central office" as used hereinafter is generic to these services and connotes a serving area covered by a single-switch office.

Accordingly, it is to be understood that the above-described embodiments are simply illustrative of the application of the principles in accordance with the present invention. Such embodiments which may now be readily devised by those in the art are limited only by the scope of the following claims.

## Claims

1. A method for establishing a communication connection between a cellular mobile calling user (941) and a called user (920) wherein cellular mobile users (941, 942) have access to a cellular network (900) which covers a number of cells (931, 932) served by a corresponding number of base stations (950, 970) and wherein all of the base stations (950, 970) are connected to the same central office (Co) in an Integrated Services Digital Network (ISDN), and each base station (950, 970) is configured with a radio port (955) to transceive radio signals with the cellular users (941, 942) within the cell (931) corresponding to each base station (950), characterised in that the central office (Co) is further configured for providing Electronic Key Telephone Service (EKTS) to the base stations (950, 970), the method comprising the steps of:
configuring each base station (950, 970) with an ISDN-based EKTS port (953) to transceive EKTS signalling messages and information with the central office (Co) via an access interface (911) having a D-channel and a B-channel, and with a converter (954) for converting between the radio signals and the EKTS signalling messages and information,
in response to a request (944) by the cellular mobile calling user (941) to establish the communication connection as received over the radio port (955) of one of the base stations (950) serving the cell (931) where the cellular mobile calling user (941) is located, converting the request (944) to ISDN-based EKTS D-channel call set-up protocol signalling messages (981) and transceiving the protocol signalling messages between said one of the base stations (950) and the central office (Co), and
when the called user (920)responds to said protocol signalling messages, setting up the communication connection between the calling cellular mobile user (941) and the called user (920), the communication connection including an ISDN B-channel (1082) between said one of the base stations (950) and the called user (920).

2. The method as recited in claim 1 wherein said step of setting up includes the steps of converting B-channel information received at said one of the base stations (950) to outgoing radio information signals (1045) for transmission to the cellular mobile calling user (941) and converting incoming radio information signals (944) received from the cellular mobile calling user (941) to information compatible for transmission over the B-channel (1082), thereby completing the communication connection between the cellular mobile calling user (941) and the called user (920).

3. A method for establishing a communication connection between an incoming calling user (1120) and a cellular mobile called user (960) wherein cellular mobile users (960) have access to a cellular network (900) which covers a number of cells (931, 932) served by a corresponding number of base stations (950, 970) and wherein all of the base stations (950, 970) are connected to the same central office (Co) in an Integrated Services Digital Network (ISDN), and each base station (950, 970) is configured with a radio port (955) to transceive radio signals with the cellular users (960) within the cell (931, 932) corresponding to each base station (950, 970) characterised in that the central office (Co) is further configured for providing Electronic Key Telephone Service (EKTS) to the base stations (950, 970), the method comprising the steps of
configuring each base station (950, 970) with an ISDN-based EKTS port (953) to transceive EKTS signalling messages and information with the central office (Co) via an access interface (912) having a D-channel and a B-channel, and with a converter (954) for converting between the radio signals and the EKTS signalling messages and information,
in response to a request (SETUP) as received at the central office (Co) from the incoming calling user (1120) to establish the communication connection with the cellular mobile called user (960), transceiving D-channel call set-up protocol signalling messages (1181, 1182) which include an identifier of the cellular mobile called user (960), between the central office (Co) and the ISDN-based EKTS port of each of the base stations (950, 970), and
when the cellular mobile called user (960) responds to said protocol signalling messages, setting up the communication connection between the calling user (1120) and the cellular mobile called user (960), the communication connection including an ISDN B-channel (1184) between the calling user (1120) and one of the base stations (970) corresponding to the cell (932) wherein the cellular mobile called user (960) is located.

4. The method as recited in claim 3 wherein said step of setting up includes the steps of
converting said signalling messages in each of the base stations to a radio set-up signal (1145, 1172) indicative of the request and propagating the radio set-up signal (1145, 1172) from the radio port of each of the base stations (950, 970),
detecting the radio set-up signal (1172) by each of the cellular mobile users (960) and identifying the cellular mobile called user (960) from the identifier (DN) in the radio set-up signal, and
returning a corresponding radio set-up signal (1262) from the cellular mobile called user (960) to said one of the base stations (970).

5. The method as recited in claim 4 wherein said step of setting up further includes the steps of converting B-channel information received at said one of the base stations (970) to outgoing radio information signals (1172) for transmission to the cellular mobile called user (960) and converting incoming radio information signals (1262) received from the cellular mobile called user (960) to information compatible for transmission over the B-channel, thereby completing the communication connection between the cellular mobile calling user (1120) and the called user (960).

6. The method as recited in claim 3 wherein said step of transceiving D-channel call set up protocol messages includes the steps of
sending an EKTS 'SETUP' message from the central office (Co) to the ISDN-EKTS port of each of the base stations (950, 970), and
sending both an EKTS 'CALL PROCEEDING' and an EKTS 'ALERTING' message from each of the base stations (950, 970) to the central office (Co).

7. The method as recited in claim 6 wherein said step of setting up the communication connection includes the steps of
sending an EKTS 'CONNECT' D-channel message from said one of the base stations (950, 970) to the central office (Co),
sending a corresponding 'CONNECT' D-channel message from the central office (Co) to the calling user (1120),
sending an EKTS 'CONNECT ACKNOWLEDGE' D-channel message from the calling user (1120) to the central office (Co),
sending a corresponding 'CONNECT ACKNOWLEDGE' D-channel message from the central office (Co) to said one of the base stations (970).

8. A method for handing off an established communication connection between a cellular mobile user (942) and another user (1420) wherein cellular mobile users (942) have access to a cellular network (900) which covers a number of cells (931, 932) served by a corresponding number of base stations (950, 970) and wherein all of the base stations (950, 970) are connected to the same central office (Co) in an Integrated Services Digital Network (ISDN) and each base station (950, 970) is configured with a radio port (955) to transceive radio signals with cellular users (942) within the cell (931, 932) corresponding to each base station (950, 970) characterised in that the central office (Co) is further configured for providing Electronic Key Telephone Service (EKTS) to the base stations (950, 970), the method comprising the steps of
configuring each base station (950, 970) with an ISDN-based EKTS port (953) to transceive EKTS signalling messages and information with the central office (Co) via an access interface (911) having a D-channel and a B-channel, and with a converter (954) for converting between the radio signals and the EKTS signalling messages and information,
in response to the cellular mobile user (942) moving from an original cell (931) served by an original base station (950) to a secondary cell (932), detecting radio signals (1402) propagated by the cellular mobile user (942) at a secondary base station (970) covering the secondary cell (932),
bridging the secondary base station on the established communication connection (1411) by transceiving D-channel protocol signalling messages (1602) with the central office (Co) to effect a three-way B-channel communication connection involving both the original and secondary base stations (950, 970),
notifying the original base station (950) using D-channel protocol signalling messages (1603) between the central office (Co) and the original base station (950)of the bridging activity of the secondary base station (970), and
disconnecting the original base station (950) from the three-way B-channel communication connection to produce a two-way connection between the cellular mobile user (942) and the other user (1420), the two-way connection including a B-channel communication connection (1602) between the secondary base station (970) and the central office (Co).

9. The method as recited in claim 8 wherein the step of disconnecting to produce the two-way connection includes the steps of converting B-channel information (1602) received at the secondary base station (970) to outgoing radio information signals (1601) for transmission to the cellular mobile user (942) and converting incoming radio information signals (1402) received from the cellular mobile user to information compatible for transmission over the B-channel to the other user, thereby completing the handoff of the stable communication connection between the cellular mobile user (942) and the other user (1420).

10. The method as recited in claim 8 further including the step of sending an EKTS 'KEY SETUP' D-channel message from the central office (Co) to the secondary base station (970) during the setting up of the established communication connection, wherein said step of bridging includes the step of sending an EKTS 'RETRIEVE' D-channel message from the secondary base station (970) to the central office (Co), and wherein said step of notifying includes the step of sending an EKTS 'NOTIFY' D-channel message from the central office (Co) to the original base station (950).

11. A method for handing off an established communication connection between a PCS cellular mobile user (2042) and another user (2020) wherein PCS cellular mobile users (2042) have access to a cellular network which covers a number of cells (931, 932) served by a corresponding number of base stations (2050, 2070) and wherein all of the base stations (2050, 2070) are connected to the same central office (Co) in an Integrated Services Digital Network (ISDN), and each base station (2050, 2070) is configured with a radio port to transceive radio signals with PCS cellular users (2042) within the cell (931, 932) corresponding to each base station (2050, 2070) characterised in that the central office (Co) is further configured for providing Electronic Key Telephone Service (EKTS) to the base stations (2050, 2070), the method comprising the steps of
configuring each base station (2050, 2070) with an ISDN-based EKTS port to transceive EKTS signalling messages and information with the central office via an access interface (911) having a D-channel and a B-channel, and with a converter for converting between the radio signals and the EKTS signalling messages and information,
assigning each base station (2050, 2070) a unique identifier so each PCS cellular mobile user may identify each base station,
as the PCS cellular mobile user (2042) moves from an original cell (931) served by an original base station (2050) to a secondary cell served by a secondary base station (2070), detecting radio signals propagated by the original base station and the secondary base station (2070),
measuring by the PCS cellular mobile user the quality of the reception from the original base station and from the secondary base station (2050, 2070),
whenever the quality of reception of the secondary base station is greater than the quality of reception of the original base station, initiating by the PCS cellular mobile user (2042) a request to transfer the established communication connection (2025) to the secondary base station (2070),
bridging the secondary base station (2070) on the established communication connection by transceiving D-channel protocol signalling messages with the central office to effect a three-way B-channel communication connection involving both the original (2050) and secondary base stations (2070),
notifying the original base station using D-channel protocol signalling messages (DISCONNECT) between the central office (Co) and the original base station (2050) of the bridging activity of the secondary base station (2070),
disconnecting the original base station from the three-way B-channel communication connection to produce a two-way B-channel communication connection between the secondary base station (2070) and the central office (Co).

12. The method as recited in claim 11 wherein the step of disconnecting to produce the two-way connection includes the steps of converting B-channel information received at the secondary base station (2070) to outgoing radio information signals (2072) for transmission to the PCS cellular mobile user (2042) and converting incoming radio information signals (2043) received from the PCS cellular mobile user (2042) to information compatible for transmission over the B-channel to the other user, thereby completing the handoff of the stable communication connection between the PCS cellular mobile user (2042) and the other user (2020).

13. The method as recited in claim 12 further including the step of sending an EKTS 'KEY SETUP' D-channel message from the central office (Co) to the secondary base station (2070) during the setting up of the established communication connection, wherein said step of bridging includes the step of sending an EKTS 'RETRIEVE' D-channel message from the secondary base station (2070) to the central office (Co), and wherein said step of notifying includes the step of sending an EKTS 'NOTIFY' D-channel message from the central office to the original base station (2050).

14. Circuitry for establishing a communication connection between a cellular mobile calling user (941) and a called user (920) wherein the cellular mobile users (941, 942) have access to a cellular network (900) which covers a number of cells (931, 932) served by a corresponding number of base stations (950, 970) and wherein all of the base stations (950, 970) are connected to the same central office (Co) in an Integrated Services Digital Network (ISDN) and each base station (950, 970) has means for configuring it with a radio port (955) to transceive radio signals with cellular users (941, 942) within the cell corresponding to each base station (950, 970) characterised in that the central office (Co) is further configured for providing Electronic Key Telephone Service (EKTS) to the base stations (950, 970), the circuitry comprising
means for configuring each base station (950, 970) with an ISDN-based EKTS port (953) to transceive EKTS signalling messages and information with the central office (Co) via an access interface (911) having a D-channel and a B-channel, said means for configuring including means (954) for converting between the radio signals and the EKTS signalling messages and information,
means (954), responsive to a request (944) by the cellular mobile calling user (941) to establish the communication connection as received over the radio port (955) of one of the base stations (950) serving the cell (931) where the cellular mobile calling user (941) is located, for converting the request (944) to EKTS D-channel call set-up protocol signalling messages (981),
means (953), responsive to said means for converting, for transceiving the protocol signalling messages between said one of the base stations (950) and the central office (Co), and
means (951), responsive to said means for transceiving (953), for setting up the communication connection, the communication connection including an ISDN B-channel (1082) between said one of the base stations (950) and the called user (920).

15. Circuitry for establishing a communication connection between an incoming calling user (1120) and a cellular mobile called user (960) wherein cellular mobile users (960) have access to a cellular network (900) which covers a number of cells (931, 932) served by a corresponding number of base stations (950, 970)and wherein all of the base stations (950, 970) are connected to the same central office (Co) in an Integrated Services Digital Network (ISDN) and each base station (950, 970) has means for configuring it with a radio port (955) to transceive radio signals with the cellular users (960) within the cell (931, 932) corresponding to each base station (950, 970), characterised in that the central office (Co) is further configured for providing Electronic Key Telephone Service (EKTS) to the base stations (950, 970), the circuitry comprising
means for configuring each base station (950, 970) with an ISDN-based EKTS port (953) to transceive EKTS signalling messages and information with the central office (Co) via an access interface (911) having a D-channel and a B-channel, said means for configuring including means (954) to convert between the radio signals and the EKTS signalling messages and information,
means, responsive to a request as received at the central office from the incoming calling user to establish the communication connection with the cellular mobile called user, for transceiving D-channel call set-up protocol signalling messages, which include an identifier of the cellular mobile called user, between the central office and the ISDN-based EKTS port of each of the base stations (950, 970), and
means, responsive to said means for transceiving and the cellular mobile called user (942) having said identifier, for setting up the communication connection between the calling user (1120) and the cellular mobile called user (942), the communication connection including an ISDN B-channel (1184) between the calling user (1120) and one of the base stations (950) corresponding to the cell (931) wherein the cellular mobile called user (942) is located.

16. Circuitry for handing off an established communication connection between a cellular mobile user (942) and another user (1420) wherein cellular mobile users (942) have access to a cellular network (900) which covers a number of cells (931, 932) served by a corresponding number of base stations (950, 970) and wherein all of the base stations (950, 970) are connected to the same central office (Co) in an Integrated Services Digital Network (ISDN) and each base station (950, 970) has means for configuring it with a radio port (955) to transceive radio signals with cellular users (942) within the cell (931, 932) corresponding to each base station (950, 970), characterised in that the central office (Co) is further configured for providing Electronic Key Telephone Service (EKTS) to the base stations (950, 970), the circuitry comprising
means for configuring each base station with an ISDN-based EKTS port (953) to transceive EKTS signalling messages and information with the central office (Co) via an access interface (911) having a D-channel and a B-channel, said means for configuring including means (954) to convert between the radio signals and the EKTS signalling messages and information,
means, responsive to the cellular mobile user moving from an original cell (931) served by an original base station (950) to a secondary cell (932), for detecting radio signals propagated by the cellular mobile user (960) at a secondary base station (970) covering the secondary cell (932),
means, responsive to said means for detecting, for bridging the secondary base station (970) on the established communication connection by transceiving D-channel protocol signalling messages with the central office (Co) to effect a three-way B-channel communication connection involving both the original and secondary base stations (950, 970),
means (914), responsive to said means for detecting, for notifying the original base station using D-channel protocol signalling messages between the central office and the original base station (950) of the bridging activity of the secondary base station, and
means (914), responsive to said means for detecting, for disconnecting the original base station (950) from the three-way B-channel communication connection to produce a two-way connection between the cellular mobile user (942) and the other user (1120), the two-way connection including a B-channel communication connection between the secondary base station and the central office.

17. Circuitry for handing off an established communication connection between a PCS cellular mobile user (2042) and another user (2020) wherein PCS cellular mobile users (2042) have access to a cellular network which covers a number of cells (931, 932) served by a corresponding number of base stations (2050, 2070) and wherein all of the base stations (2050, 2070) are connected to the same central office (Co) in an Integrated Services Digital Network (ISDN) and each base station (2050, 2070) is configured with a radio port to transceive radio signals with PCS cellular users (2042) within the cell (931, 932) corresponding to each base station (2050, 2070) characterised in that the central office (Co) is further configured for providing Electronic Key Telephone Service (EKTS) to the base stations (2050, 2070), the circuitry comprising
means for configuring each base station (2050, 2070) with an ISDN-based EKTS port to transceive EKTS signalling messages and information with the central office via an access interface (911) having a D-channel and a B-channel, said means for configuring including means for converting between the radio signals and the EKTS signalling messages and information, each base station (2050, 2070) having a unique identifier so each PCS cellular mobile user may identify each base station (2050, 2070),
means, responsive to the PCS cellular mobile user (2042) moving from an original cell (931) served by an original base station (2050) to a secondary cell (932) served by a secondary base station (2070), for detecting radio signals propagated by the original base station (2050) and the secondary base station (2070),
means for measuring by the PCS cellular mobile user (2042) the quality of the reception from the original base station (2050) and from the secondary base station (2070),
means, responsive to said means for measuring, for initiating by the PCS cellular mobile user (2042) a request to transfer the established communication connection to the secondary base station (2070) whenever the quality of reception of the secondary base station (2070) is greater than the quality of reception of the original base station (2050),
means, responsive to said means for initiating, for bridging the secondary base station on the established communication connection by transceiving D-channel protocol signalling messages with the central office to effect a three-way B-channel communication connection involving both the original and secondary base stations (2050, 2070),
means, responsive to said means for bridging, for notifying the original base station (2050) using D-channel protocol signalling messages between the central office (Co) and the original base station (2050) of the bridging activity of the secondary base station (2070), and
means, responsive to said means for notifying, for disconnecting the original base station (2050) from the three-way B-channel communication connection to produce a two-way B-channel communication connection between the secondary base station (2070)and the central office (Co).

## Patentansprüche

1. Verfahren zum Aufbau einer Kommunikationsverbindung zwischen einem anrufenden Mobilfunkteilnehmer (941) und einem angerufenen Teilnehmer (920), wobei Mobilfunkteilnehmer (941, 942) Zugriff auf ein Mobilfunknetz (900) haben, das eine Anzahl Zellen (931, 932) abdeckt, die von einer entsprechenden Anzahl Basisstationen (950, 970) bedient werden, und wobei alle diese Basisstationen (950, 970) mit der selben Zentralstelle (Co) in einem dienstintegrierenden digitalen Fernmeldenetz (ISDN) verbunden sind, und jede Basisstation (950, 970) mit einen Hochfrequenzanschluss (955) ausgestattet ist, um mit den Mobilfunkteilnehmern (941, 942) in der Zelle (931), die zu jeder Basisstation (950) gehört, Hochfrequenzsignale auszutauschen, dadurch gekennzeichnet, dass die Zentralstelle (Co) zudem dafür eingerichtet ist, den Basisstationen (950, 970) den Electronic Key Telephone Service (EKTS) zu bieten, und das Verfahren die Schritte umfasst:
das Ausrüsten einer jeden Basisstation (950, 970) mit einem ISDN-gestützten EKTS-Anschluss (953) zum Austauschen von EKTS-Signalisiermeldungen und Informationen mit der Zentralstelle (Co) über eine Zugriffsschnittstelle (911), die einen D-Kanal und einen B-Kanal besitzt, und mit einem Konverter (954), der die Hochfrequenzsignale und die EKTS-Signalisiermeldungen und Informationen ineinander umsetzt,
abhängig von einer Anforderung (944) des anrufenden Mobilfunkteilnehmers (941) zum Aufbau der Kommunikationsverbindung, die über den Hochfrequenzanschluss (955) einer der Basisstationen (950) empfangen wurde, die der Zelle (931) dient, in der sich der anrufende Mobilfunkteilnehmer (941) aufhält, das Umsetzen der Anforderung (944) auf ISDN-gestützte EKTS-D-Kanal-VerbindungsaufbauProtokollsignalisiermeldungen (981) und Austauschen der Protokollsignalisiermeldungen zwischen der einen Basisstation (950) und der Zentralstelle (Co); und
bei einer Antwort des angerufenen Teilnehmers (920) auf die Protokollsignalisiermeldungen, das Aufbauen der Kommunikationsverbindung zwischen dem anrufenden Mobilfunkteilnehmer (941) und dem angerufenen Teilnehmer (920), wobei die Kommunikationsverbindung einen ISDN-B-Kanal (1082) zwischen der einen Basisstation (950) und dem angerufenen Teilnehmer (920) umfasst.

2. Verfahren nach Anspruch 1, wobei der Aufbauschritt die Schritte enthält: Umsetzen der an einer der Basisstationen (950) empfangenen B-Kanal-Information in abgehende Hochfrequenz-Informationssignale (1045) für die Übertragung zum anrufenden Mobilfunkteilnehmer (941), und Umsetzen der eingehenden Hochfrequenz-Informationssignale (944), die vom anrufenden Mobilfunkteilnehmer (941) empfangen wurden, in Information, die für eine Übertragung über den B-Kanal (1082) geeignet ist, womit die Kommunikationsverbindung zwischen dem anrufenden Mobilfunkteilnehmer (941) und dem angerufenen Teilnehmer (920) vervollständigt wird.

3. Verfahren zum Aufbau einer Kommunikationsverbindung zwischen einen Teilnehmer (1120), dessen Anruf eingeht, und einem angerufenen Mobilfunkteilnehmer (960), wobei die Mobilfunkteilnehmer (960) Zugriff auf ein Mobilfunknetz (900) haben, das eine Anzahl Zellen (931, 932) abdeckt, die von einer entsprechenden Anzahl Basisstationen (950, 970) bedient werden, wobei alle diese Basisstationen (950, 970) mit der gleichen Zentralstelle (Co) in einem dienstintegrierenden digitalen Fernmeldenetz (ISDN) verbunden sind, und jede Basisstation (950, 970) mit einem Hochfrequenzanschluss (955) ausgestattet ist, um Hochfrequenzsignale mit den Mobilfunkteilnehmern (960) in der Zelle (931, 932) auszutauschen, die zu jeder Basisstation (950, 970) gehört, dadurch gekennzeichnet, dass die Zentralstelle (Co) zudem dafür eingerichtet ist, den Basisstationen (950, 970) den Electronic Key Telephone Service (EKTS) zu bieten, und das Verfahren die Schritte umfasst:
das Ausrüsten einer jeden Basisstation (950, 970) mit einem ISDN-gestützten EKTS-Anschluss (953) zum Austauschen von EKTS-Signalisiermeldungen und Informationen mit der Zentralstelle (Co) über eine Zugriffsschnittstelle (912), die einen D-Kanal und einen B-Kanal besitzt, und mit einem Konverter (954), der die Hochfrequenzsignale und die EKTS-Signalisiermeldungen und Informationen ineinander umsetzt,
abhängig von einer Anforderung (SETUP), die in der Zentralstelle (Co) vom anrufenden Teilnehmer (1120) eingeht, die Kommunikationsverbindung mit dem angerufenen Mobilfunkteilnehmer (960) herzustellen, das Austauschen von D-Kanal-Verbindungsaufbau-Protokollsignalisiermeldungen (1181, 1182), die eine Kennung des angerufenen Mobilfunkteilnehmers (960) enthalten, zwischen der Zentralstelle (Co) und dem ISDN-gestützten EKTS-Anschluss einer jeden Basisstation (950, 970), und
bei einer Antwort des angerufenen Mobilfunkteilnehmers (960) auf die Protokollsignalisiermeldungen, das Aufbauen der Kommunikationsverbindung zwischen dem anrufenden Teilnehmer (1120) und dem angerufenen Mobilfunkteilnehmer (960), wobei die Kommunikationsverbindung einen ISDN-B-Kanal (1184) zwischen dem anrufenden Teilnehmer (1120) und einer der Basisstationen (970) umfasst, die zu der Zelle (932) gehört, in der sich der angerufene Mobilfunkteilnehmers (960) aufhält.

4. Verfahren nach Anspruch 3, wobei der Aufbauschritt die Schritte enthält: Umsetzen der Signalisiermeldungen in jeder Basisstation in ein Hochfrequenz-Aufbausignal (1145, 1172), das die Anforderung anzeigt, und das Aussenden des Hochfrequenz-Aufbausignals (1145, 1172) vom Hochfrequenzanschluss einer jeden Basisstation (950, 970),
Erfassen des Hochfrequenz-Aufbausignals (1172) durch jeden Mobilfunkteilnehmer (960) und Identifizieren des angerufenen Mobilfunkteilnehmers (960) durch die Kennung (DN) im Hochfrequenz-Aufbausignal, und
Rücksenden eines entsprechenden Hochfrequenz-Aufbausignals (1262) vom angerufenen Mobilfunkteilnehmer (950) zu der einen Basisstation (970).

5. Verfahren nach Anspruch 4, wobei der Aufbauschritt zudem die Schritte enthält: Umsetzen der an der einen Basisstation (970) empfangenen B-Kanal-Information in abgehende Hochfrequenz-Informationssignale (1172), die zum angerufenen Mobilfunkteilnehmer (960) übertragen werden, und Umsetzen der eingehenden Hochfrequenz-Informationssignale (1262), die vom angerufenen Mobilfunkteilnehmer (960) empfangen werden, in Information, die sich für die Übertragung über den B-Kanal eignet, womit die Kommunikationsverbindung zwischen dem anrufenden Mobilfunkteilnehmer (1120) und dem angerufenen Teilnehmer (960) vervollständigt wird.

6. Verfahren nach Anspruch 3, wobei der Schritt des Austauschens der D-Kanal-Verbindungsaufbau-Protokollsignalisiermeldungen die Schritte enthält:
Senden einer EKTS-'SETUP'-Meldung von der Zentralstelle (Co) zum ISDN-EKTS-Anschluss einer jeden Basisstation (950, 970), und
Senden einer EKTS-'CALL PROCEEDING'-Meldung und einer EKTS-'ALERTING'-Meldung von jeder Basisstation (950, 970) zur Zentralstelle (Co).

7. Verfahren nach Anspruch 6, wobei der Schritt des Aufbauens der Kommunikationsverbindung die Schritte umfasst:
Senden einer EKTS-'CONNECT'-Meldung von der einen Basisstation (950, 970) zur Zentralstelle (Co),
Senden einer entsprechenden 'CONNECT'-D-Kanal-Meldung von der Zentralstelle (Co) zum anrufenden Teilnehmer (1120),
Senden einer EKTS-'CONNECT ACKNOWLEDGE'-D-Kanal-Meldung vom anrufenden Teilnehmer (1120) zur Zentralstelle (Co),
Senden einer entsprechenden 'CONNECT ACKNOWLEDGE'-D-Kanal-Meldung von der Zentralstelle (Co) zu der einen Basisstation (970)

8. Verfahren zum Weiterreichen einer bestehenden Kommunikationsverbindung zwischen einem Mobilfunkteilnehmer (942) und einem weiteren Teilnehmer (1420), wobei die Mobilfunkteilnehmer (942) Zugriff auf ein Mobilfunknetz (900) haben, das eine Anzahl Zellen (931, 932) abdeckt, die von einer entsprechenden Anzahl Basisstationen (950, 970) bedient werden, und wobei alle diese Basisstationen (950, 970) mit der selben Zentralstelle (Co) in einem dienstintegrierenden digitalen Fernmeldenetz (ISDN) verbunden sind, und jede Basisstation (950, 970) mit einen Hochfrequenzanschluss (955) ausgestattet ist, um mit den Mobilfunkteilnehmern (942) in der Zelle (931, 932), die zu jeder Basisstation (950, 970) gehört, Hochfrequenzsignale auszutauschen, dadurch gekennzeichnet, dass die Zentralstelle (Co) zudem dafür eingerichtet ist, den Basisstationen (950, 970) den Electronic Key Telephone Service (EKTS) zu bieten, und das Verfahren die Schritte umfasst:
das Ausrüsten einer jeden Basisstation (950, 970) mit einem ISDN-gestützten EKTS-Anschluss (953) zum Austauschen von EKTS-Signalisiermeldungen und Informationen mit der Zentralstelle (Co) über eine Zugriffsschnittstelle (911), die einen D-Kanal und einen B-Kanal besitzt, und mit einem Konverter (954), der die Hochfrequenzsignale und die EKTS-Signalisiermeldungen und Informationen ineinander umsetzt,
abhängig vom Mobilfunkteilnehmer (942), der sich von einer Ursprungszelle (931), die von einer Ursprungsbasisstation (950) bedient wird, in eine zweite Zelle (932) bewegt, das Erfassen der Hochfrequenzsignale (1402), die der Mobilfunkteilnehmer (942) aussendet, in einer zweiten Basisstation (970), die die zweite Zelle (932) abdeckt,
das Aufschalten der zweiten Basisstation auf die bestehende Kommunikationsverbindung (1411) durch das Austauschen von D-Kanal-Protokollsignalisiermeldungen (1602) mit der Zentralstelle (Co), damit eine Dreiweg-B-Kanal-Kommunikationsverbindung hergestellt wird, an der die ursprüngliche und die zweite Basisstation (950, 970) beteiligt sind,
das Benachrichtigen der Ursprungsbasisstation (950) mit Hilfe von D-Kanal-Protokollsignalisiermeldungen (1603) zwischen der Zentralstelle (Co) und der Ursprungsbasisstation (950) von der Aufschalthandlung der zweiten Basisstation (970), und
das Abtrennen der Ursprungsbasisstation (950) von der Dreiweg-B-Kanal-Kommunikationsverbindung, damit eine Zweiwegverbindung zwischen dem Mobilfunkteilnehmer (942) und dem anderen Teilnehmer (1420) hergestellt wird, wobei die Zweiwegverbindung eine B-Kanal-Kommunikationsverbindung (1602) zwischen der zweiten Basisstation (970) und der Zentralstelle (Co) umfasst.

9. Verfahren nach Anspruch 8, wobei der Abtrennschritt zum Herstellen der Zweiwegverbindung die Schritte umfasst: das Umsetzen der an der zweiten Basisstation (970) empfangenen B-Kanal-Information (1602) in abgehende Hochfrequenz-Informationssignale (1601), die zum Mobilfunkteilnehmer (942) übertragen werden, und das Umsetzen der vom Mobilfunkteilnehmer eingehenden Hochfrequenz-Informationssignale (1402) in Information, die für die Übertragung über den B-Kanal zum anderen Teilnehmer geeignet ist, und damit das Abschließen des Weiterreichens der stabilen Kommunikationsverbindung zwischen dem Mobilfunkteilnehmer (942) und dem anderen Teilnehmer (1420).

10. Verfahren nach Anspruch 8, zudem umfassend den Schritt des Sendens einer EKTS-'KEY SETUP'-D-Kanalmeldung von der Zentralstelle (Co) zur zweiten Basisstation (970) während des Aufbaus der bestehenden Kommunikationsverbindung, wobei der Aufschaltschritt den Schritt des Sendens einer EKTS-'RETRIEVE'-D-Kanalmeldung von der zweiten Basisstation (970) zur Zentralstelle (Co) enthält, und worin der Benachrichtigungsschritt den Schritt des Sendens einer EKTS-'NOTIFY'-D-Kanalmeldung von der Zentralstelle (Co) zur Ursprungsbasisstation (950) enthält.

11. Verfahren zum Weiterreichen einer bestehenden Kommunikationsverbindung zwischen einem PCS-Mobilfunkteilnehmer (2042) und einem weiteren Teilnehmer (2020), wobei die PCS-Mobilfunkteilnehmer (2042) Zugriff auf ein Mobilfunknetz haben, das eine Anzahl Zellen (931, 932) abdeckt, die von einer entsprechenden Anzahl Basisstationen (2050, 2070) bedient werden, und wobei alle diese Basisstationen (2050, 2070) mit der selben Zentralstelle (Co) in einem dienstintegrierenden digitalen Fernmeldenetz (ISDN) verbunden sind, und jede Basisstation (2050, 2070) mit einen Hochfrequenzanschluss ausgestattet ist, um mit den PCS-Mobilfunkteilnehmern (2042) in der Zelle (931, 932), die zu jeder Basisstation (2050, 2070) gehört, Hochfrequenzsignale auszutauschen, dadurch gekennzeichnet, dass die Zentralstelle (Co) zudem dafür eingerichtet ist, den Basisstationen (2050, 2070) den Electronic Key Telephone Service (EKTS) zu bieten, und das Verfahren die Schritte umfasst:
das Ausrüsten einer jeden Basisstation (2050, 2070) mit einem ISDN-gestützten EKTS-Anschluss zum Austauschen von EKTS-Signalisiermeldungen und Informationen mit der Zentralstelle über eine Zugriffsschnittstelle (911), die einen D-Kanal und einen B-Kanal besitzt, und mit einem Konverter, der die Hochfrequenzsignale und die EKTS-Signalisiermeldungen und Informationen ineinander umsetzt,
das Zuweisen einer eindeutigen Kennung an jede Basisstation (2050, 2070) , so dass jeder PCS-Mobilfunkteilnehmer jede Basisstation identifizieren kann,
wenn sich der PCS-Mobilfunkteilnehmer (2042) aus der Ursprungszelle (931), die von der Ursprungsbasisstation (2050) bedient wird, in eine zweite Zelle bewegt, die von einer zweiten Basisstation (2070) bedient wird, das Erfassen der Hochfrequenzsignale, die die Ursprungsbasisstation (2050) und zweite Basisstation (2070) aussenden,
das Messen der Empfangsqualität der Ursprungsbasisstation (2050) und der zweiten Basisstation (2070) durch den PCS-Mobilfunkteilnehmer,
immer dann, wenn die Empfangsqualität der zweiten Basisstation besser ist als die Empfangsqualität der Ursprungsbasisstation, das Auslösen einer Anforderung zum Übertragen der bestehenden Kommunikationsverbindung (2025) zur zweiten Basisstation (2070) durch den PCS-Mobilfunkteilnehmer (2042),
das Aufschalten der zweiten Basisstation (2070) auf die bestehende Kommunikationsverbindung durch das Austauschen von D-Kanal-Protokollsignalisiermeldungen mit der Zentralstelle, damit eine Dreiweg-B-Kanal-Kommunikationsverbindung hergestellt wird, an der die ursprüngliche Basisstation (2050) und die zweite Basisstation (2070) beteiligt sind,
das Benachrichtigen der Ursprungsbasisstation mit Hilfe von D-Kanal-Protokollsignalisiermeldungen (DISCONNECT) zwischen der Zentralstelle (Co) und der Ursprungsbasisstation (2050) von der Aufschalthandlung der zweiten Basisstation (2070),
das Abtrennen der Ursprungsbasisstation von der Dreiweg-B-Kanal-Kommunikationsverbindung, damit eine Zweiweg-B-Kanal-Kommunikationsverbindung zwischen der zweiten Basisstation (2070) und der Zentralstelle (Co) hergestellt wird.

12. Verfahren nach Anspruch 11, wobei der Abtrennschritt zum Herstellen der Zweiwegverbindung die Schritte umfasst: das Umsetzen der an der zweiten Basisstation (2070) empfangenen B-Kanal-Information in abgehende Hochfrequenz-Informationssignale (2072), die zum PCS-Mobilfunkteilnehmer (2042) übertragen werden, und das Umsetzen der vom PCS-Mobilfunkteilnehmer (2042) eingehenden Hochfrequenz-Informationssignale (2043) in Information, die für die Übertragung über den B-Kanal zum anderen Teilnehmer geeignet ist, und damit das Abschließen des Weiterreichens der stabilen Kommunikationsverbindung zwischen dem PCS-Mobilfunkteilnehmer (2042) und dem anderen Teilnehmer (2020).

13. Verfahren nach Anspruch 12, zudem umfassend den Schritt des Sendens einer EKTS-'KEY SETUP'-D-Kanalmeldung von der Zentralstelle (Co) zur zweiten Basisstation (2070) während des Aufbaus der bestehenden Kommunikationsverbindung, wobei der Aufschaltschritt den Schritt des Sendens einer EKTS-'RETRIEVE'-D-Kanalmeldung von der zweiten Basisstation (2070) zur Zentralstelle (Co) enthält, und worin der Benachrichtigungsschritt den Schritt des Sendens einer EKTS-'NOTIFY'-D-Kanalmeldung von der Zentralstelle zur Ursprungsbasisstation (2050) enthält.

14. Schaltungen zum Herstellen einer Kommunikationsverbindung zwischen einem anrufenden Mobilfunkteilnehmer (941) und einem angerufenen Teilnehmer (920), wobei die Mobilfunkteilnehmer (941, 942) Zugriff auf ein Mobilfunknetz (900) haben, das eine Anzahl Zellen (931, 932) abdeckt, die von einer entsprechenden Anzahl Basisstationen (950, 970) bedient werden, und wobei alle diese Basisstationen (950, 970) mit der selben Zentralstelle (Co) in einem dienstintegrierenden digitalen Fernmeldenetz (ISDN) verbunden sind, und jede Basisstation (950, 970) Vorrichtungen zur Verbindung mit einem Hochfrequenzanschluss (955) hat, um mit den Mobilfunkteilnehmern (941, 942) in der Zelle, die zu jeder Basisstation (950, 970) gehört, Hochfrequenzsignale auszutauschen, dadurch gekennzeichnet, dass die Zentralstelle (Co) zudem dafür eingerichtet ist, den Basisstationen (950, 970) den Electronic Key Telephone Service (EKTS) zu bieten, und die Schaltungen umfassen:
eine Vorrichtung zum Ausrüsten einer jeden Basisstation (950, 970) mit einem ISDN-gestützten EKTS-Anschluss (953) zum Austauschen von EKTS-Signalisiermeldungen und Informationen mit der Zentralstelle (Co) über eine Zugriffsschnittstelle (911), die einen D-Kanal und einen B-Kanal besitzt, wobei die Ausrüstvorrichtung eine Einrichtung (954) enthält, die die Hochfrequenzsignale und die EKTS-Signalisiermeldungen und Informationen ineinander umsetzt,
eine Einrichtung (954), die auf eine Anforderung (944) des anrufenden Mobilfunkteilnehmers (941) zum Aufbau der Kommunikationsverbindung anspricht, die über den Hochfrequenzanschluss (955) von einer der Basisstationen (950) empfangen wurde, die der Zelle (931) dienen, in der sich der anrufende Mobilfunkteilnehmer (941) aufhält, und die die Anforderung (944) in EKTS-D-Kanal-Verbindungsaufbau-Protokollsignalisiermeldungen (981) umsetzt,
eine Vorrichtung (953), die von der Umsetzvorrichtung angestoßen wird und die Protokollsignalisiermeldungen zwischen der einen Basisstation (950) und der Zentralstelle (Co) austauscht, und
eine Vorrichtung (951), die von der Austauschvorrichtung (953) angestoßen wird und die Kommunikationsverbindung aufbaut, wobei die Kommunikationsverbindung einen ISDN-B-Kanal (1082) zwischen der einen Basisstation (950) und dem angerufenen Teilnehmer (920) enthält.

15. Schaltungen zum Herstellen einer Kommunikationsverbindung zwischen einem Teilnehmer (1120), dessen Anruf hereinkommt, und einem angerufenen Mobilfunkteilnehmer (960), worin Mobilfunkteilnehmer (960) Zugriff auf ein Mobilfunknetz (900) haben, das eine Anzahl Zellen (931, 932) abdeckt, die von einer entsprechenden Anzahl Basisstationen (950, 970) bedient werden, und wobei alle diese Basisstationen (950, 970) mit der selben Zentralstelle (Co) in einem dienstintegrierenden digitalen Fernmeldenetz (ISDN) verbunden sind, und jede Basisstation (950, 970) Vorrichtungen zum Verbinden mit einem Hochfrequenzanschluss (955) hat, um mit den Mobilfunkteilnehmern (960) in der Zelle (931, 932), die zu jeder Basisstation (950, 970) gehört, Hochfrequenzsignale auszutauschen, dadurch gekennzeichnet, dass die Zentralstelle (Co) zudem dafür eingerichtet ist, den Basisstationen (950, 970) den Electronic Key Telephone Service (EKTS) zu bieten, und die Schaltungen umfassen:
Vorrichtungen zum Ausrüsten einer jeden Basisstation (950, 970) mit einem ISDN-gestützten EKTS-Anschluss (953) zum Austauschen von EKTS-Signalisiermeldungen und Informationen mit der Zentralstelle (Co) über eine Zugriffsschnittstelle (911), die einen D-Kanal und einen B-Kanal besitzt, wobei die Ausrüstvorrichtung eine Einrichtung (954) enthält, die die Hochfrequenzsignale und die EKTS-Signalisiermeldungen und Informationen ineinander umsetzt,
eine Einrichtung, die auf eine in der Zentralstelle eingegangene Anforderung des Teilnehmers, dessen Anruf hereinkommt, zum Aufbau der Kommunikationsverbindung mit dem angerufenen Mobilfunkteilnehmer anspricht, und D-Kanal-Verbindungsaufbau-Protokollsignalisiermeldungen zwischen der Zentralstelle und dem ISDN-gestützten EKTS-Anschluss einer jeden Basisstation (950, 970) austauscht, die eine Kennung des angerufenen Mobilfunkteilnehmers enthalten, und
eine Vorrichtung, die von der Austauschvorrichtung angestoßen wird und vom angerufenen Mobilfunkteilnehmer (942), der die Kennung besitzt, zum Aufbau der Kommunikationsverbindung zwischen dem anrufenden Teilnehmer (1120) und dem angerufenen Mobilfunkteilnehmer (942), wobei die Kommunikationsverbindung einen ISDN-B-Kanal (1184) zwischen dem anrufenden Teilnehmer (1120) und einer der Basisstationen (950) enthält, die zu der Zelle (931) gehören, in der sich der angerufene Mobilfunkteilnehmer (942) aufhält.

16. Schaltungen zum Weiterreichen einer bestehenden Kommunikationsverbindung zwischen einem Mobilfunkteilnehmer (942) und einem weiteren Teilnehmer (1420), wobei Mobilfunkteilnehmer (942) Zugriff auf ein Mobilfunknetz (900) haben, das eine Anzahl Zellen (931, 932) abdeckt, die von einer entsprechenden Anzahl Basisstationen (950, 970) bedient werden, und wobei alle diese Basisstationen (950, 970) mit der selben Zentralstelle (Co) in einem dienstintegrierenden digitalen Fernmeldenetz (ISDN) verbunden sind, und jede Basisstation (950, 970) eine Vorrichtung hat, die sie mit einem Hochfrequenzanschluss (955) verbindet, um mit den Mobilfunkteilnehmern (942) in der Zelle (931, 932), die zu jeder Basisstation (950, 970) gehört, Hochfrequenzsignale auszutauschen, dadurch gekennzeichnet, dass die Zentralstelle (Co) zudem dafür eingerichtet ist, den Basisstationen (950, 970) den Electronic Key Telephone Service (EKTS) zu bieten, und die Schaltungen umfassen:
eine Vorrichtung zum Ausrüsten einer jeden Basisstation mit einem ISDN-gestützten EKTS-Anschluss (953) zum Austauschen von EKTS-Signalisiermeldungen und Informationen mit der Zentralstelle (Co) über eine Zugriffsschnittstelle (911), die einen D-Kanal und einen B-Kanal besitzt, wobei die Ausrüstvorrichtung eine Vorrichtung (954) besitzt, die die Hochfrequenzsignale und die EKTS-Signalisiermeldungen und Informationen ineinander umsetzt,
eine Vorrichtung, die auf einen Mobilfunkteilnehmer anspricht, der sich von einer Ursprungszelle (931), die von einer Ursprungsbasisstation (950) bedient wird, in eine zweite Zelle (932) bewegt, und Hochfrequenzsignale erfasst, die der Mobilfunkteilnehmer (960) aussendet, und zwar in einer zweiten Basisstation (970), die die zweite Zelle (932) abdeckt,
eine von der Erfassungsvorrichtung angestoßene Vorrichtung zum Aufschalten der zweiten Basisstation (970) auf die bestehende Kommunikationsverbindung durch das Austauschen von D-Kanal-Protokollsignalisiermeldungen mit der Zentralstelle (Co), damit eine Dreiweg-B-Kanal-Kommunikationsverbindung hergestellt wird, an der die ursprüngliche und die zweite Basisstation (950, 970) beteiligt sind,
eine von der Erfassungsvorrichtung angestoßene Vorrichtung (914), die die Ursprungsbasisstation mit Hilfe von D-Kanal-Protokollsignalisiermeldungen zwischen der Zentralstelle und der Ursprungsbasisstation (950) von der Aufschalthandlung der zweiten Basisstation benachrichtigt, und
eine von der Erfassungsvorrichtung angestoßene Vorrichtung (914) zum Abtrennen der Ursprungsbasisstation (950) von der Dreiweg-B-Kanal-Kommunikationsverbindung, damit eine Zweiwegverbindung zwischen dem Mobilfunkteilnehmer (942) und dem anderen Teilnehmer (1120) hergestellt wird, wobei die Zweiwegverbindung eine B-Kanal-Kommunikationsverbindung zwischen der zweiten Basisstation und der Zentralstelle umfasst.

17. Schaltungen zum Weiterreichen einer bestehenden Kommunikationsverbindung zwischen einem PCS-Mobilfunkteilnehmer (2042) und einemweiteren Teilnehmer (2020), wobei die PCS-Mobilfunkteilnehmer (2042) Zugriff auf ein Mobilfunknetz haben, das eine Anzahl Zellen (931, 932) abdeckt, die von einer entsprechenden Anzahl Basisstationen (2050, 2070) bedient werden, und wobei alle diese Basisstationen (2050, 2070) mit der selben Zentralstelle (Co) in einem dienstintegrierenden digitalen Fernmeldenetz (ISDN) verbunden sind, und jede Basisstation (2050, 2070) mit einen Hochfrequenzanschluss ausgestattet ist, um mit den PCS-Mobilfunkteilnehmern (2042) in der Zelle (931, 932), die zu jeder Basisstation (2050, 2070) gehört, Hochfrequenzsignale auszutauschen, dadurch gekennzeichnet, dass die Zentralstelle (Co) zudem dafür eingerichtet ist, den Basisstationen (2050, 2070) den Electronic Key Telephone Service (EKTS) zu bieten, und die Schaltungen umfassen:
eine Vorrichtung zum Ausrüsten einer jeden Basisstation (2050, 2070) mit einem ISDN-gestützten EKTS-Anschluss zum Austauschen von EKTS-Signalisiermeldungen und Informationen mit der Zentralstelle über eine Zugriffsschnittstelle (911), die einen D-Kanal und einen B-Kanal besitzt, wobei die Ausrüstvorrichtung eine Vorrichtung besitzt, die die Hochfrequenzsignale und die EKTS-Signalisiermeldungen und Informationen ineinander umsetzt, und jede Basisstation (2050, 2070) eine eindeutige Kennung hat, so dass jeder PCS-Mobilfunkteilnehmer jede Basisstation (2050, 2070) identifizieren kann,
eine Vorrichtung, die auf den PCS-Mobilfunkteilnehmer (2042) anspricht, der sich aus der Ursprungszelle (931), die von der Ursprungsbasisstation (2050) bedient wird, in eine zweite Zelle (932) bewegt, die von einer zweiten Basisstation (2070) bedient wird, und dem Erfassen der Hochfrequenzsignale dient, die die Ursprungsbasisstation (2050) und zweite Basisstation (2070) aussenden,
eine Vorrichtung zum Messen der Empfangsqualität der Ursprungsbasisstation (2050) und der zweiten Basisstation (2070) durch den PCS-Mobilfunkteilnehmer (2042),
eine von der Messvorrichtung angestoßene Vorrichtung, die immer dann, wenn die Empfangsqualität der zweiten Basisstation (2070) besser ist als die Empfangsqualität der Ursprungsbasisstation (2050), durch den PCS-Mobilfunkteilnehmer (2042) eine Anforderung zum Übertragen der bestehenden Kommunikationsverbindung zur zweiten Basisstation (2070) auslöst,
eine von der Ausläsevorrichtung angestoßene Vorrichtung zum Aufschalten der zweiten Basisstation auf die bestehende Kommunikationsverbindung durch das Austauschen von D-Kanal-Protokollsignalisiermeldungen mit der Zentralstelle, damit eine Dreiweg-B-Kanal-Kommunikationsverbindung hergestellt wird, an der die ursprüngliche Basisstation (2050) und die zweite Basisstation (2070) beteiligt sind,
eine von der Aufschaltvorrichtung angestoßene Vorrichtung zum Benachrichtigen der Ursprungsbasisstation (2050) von der Aufschalthandlung der zweiten Basisstation (2070) mit Hilfe von D-Kanal-Protokollsignalisiermeldungen zwischen der Zentralstelle (Co) und der Ursprungsbasisstation (2050), und
eine von der Benachrichtigungsvorrichtung angestoßene Vorrichtung zum Abtrennen der Ursprungsbasisstation (2050) von der Dreiweg-B-Kanal-Kommunikationsverbindung, damit eine Zweiweg-B-Kanal-Kommunikationsverbindung zwischen der zweiten Basisstation (2070) und der Zentralstelle (Co) hergestellt wird.

## Revendications

1. Procédé d'établissement d'un branchement de communication entre un utilisateur appelant (941) de système mobile cellulaire et un utilisateur appelé (920) dans lequel les utilisateurs (941, 942) du système mobile cellulaire ont accès à un réseau cellulaire (900) qui recouvre un certain nombre de cellules (931, 932) prises en charge par un nombre correspondant de stations de base (950, 970) et dans lequel toutes les stations de base (950, 970) sont reliées au même central (Co) dans un "Réseau Numérique avec Intégration de Services" (RNIS), et chaque station de base (950, 970) est configurée avec un port radio (955) pour l'émission-réception de signaux radio avec les utilisateurs cellulaires (941, 942) à l'intérieur de la cellule (931) correspondant à chaque station de base (950), caractérisé en ce que le centrale (Co) est en outre configuré pour fournir un "Electronic Key Telephone Service" (EKTS) aux stations de base (950, 970), le procédé comprenant les étapes consistant à :
configurer chaque station de base (950, 970) avec un port EKTS à base RNIS (953) pour l'émission-réception de messages et d'informations de signalisation EKTS avec le central (Co) par l'intermédiaire d'une interface d'accès (911) présentant un canal-D et un canal-B, et avec un convertisseur (954) pour effectuer une conversion entre les signaux radio et les messages et informations de signalisation EKTS,
en réponse à une requête (944), par l'utilisateur appelant (941) du système mobile cellulaire, d'établir le branchement de communication tel que reçu sur le port radio (955) d'une des stations de base (950) prenant en charge la cellule (931) où est situé l'utilisateur appelant (941) du système mobile cellulaire, convertir la requête (944) en messages (981) de signalisation de protocole d'établissement d'appel de canal-D EKTS à base RNIS et effectuer une émission-réception des messages de signalisation de protocole entre cette station de base (950) et le central (Co), et
lorsque l'utilisateur appelé (920) répond auxdits messages de signalisation de protocole, établir le branchement de communication entre l'utilisateur appelant (941) du système mobile cellulaire et l'utilisateur appelé (920), le branchement de communication comprenant un canal-B RNIS (1082) entre cette station de base (950) et l'utilisateur appelé (920).

2. Le procédé tel qu'énoncé à la revendication 1 dans lequel ladite étape d'établissement comprend les étapes consistant à convertir les informations de canal-B reçues au niveau de cette station de base (950) en signaux d'information radio de sortie (1045) pour transmission vers l'utilisateur appelant (941) du système mobile cellulaire et convertir les signaux d'informations radio d'entrée (944) en informations compatibles pour transmission sur le canal-B (1082), en achevant ainsi le branchement de communication entre l'utilisateur appelant (941) du système mobile cellulaire et l'utilisateur appelé (920).

3. Un procédé d'établissement d'un branchement de communication entre un utilisateur appelant d'entrée (1120) et un utilisateur appelé (960) de système mobile cellulaire dans lequel les utilisateurs (960) du système mobile cellulaire ont accès à un réseau cellulaire (900) qui recouvre un certain nombre de cellules (931, 932) prises en charge par un nombre correspondant de stations de base (950, 970) et dans lequel toutes les stations de base (950, 970) sont reliées au même central (Co) dans un "Réseau Numérique avec Intégration de Services" (RNIS), et chaque station de base (950, 970) est configurée avec un port radio (955) pour l'émission-réception de signaux radio avec les utilisateurs cellulaires (960) à l'intérieur de la cellule (931, 932) correspondant à chaque station de base (950, 970), caractérisé en ce que le central (Co) est en outre configuré pour fournir un "Electronic Key Telephone Service" (EKTS) aux stations de base (950, 970), le procédé comprenant les étapes consistant à
configurer chaque station de base (950, 970) avec un port EKTS à base RNIS (953) pour l'émission-réception de messages et d'informations de signalisation EKTS avec le central (Co) par l'intermédiaire d'une interface d'accès (912) présentant un canal-D et un canal-B, et avec un convertisseur (954) pour effectuer une conversion entre les signaux radio et les messages et informations de signalisation EKTS,
en réponse à une requête (ÉTABLISSEMENT), telle que reçue au niveau du central (Co) à partir d'un utilisateur appelant d'entrée (1120), d'établir le branchement de communication avec l'utilisateur appelé (960) du système mobile cellulaire, effectuer une émission-réception de messages de signalisation de protocole d'établissement d'appel de canal-D (1181, 1182) qui comprennent un identificateur de l'utilisateur appelé (960) du système mobile cellulaire, entre le central (Co) et le port EKTS à base RNIS de chacune des stations de base (950, 970), et
lorsque l'utilisateur appelé (960) du système mobile cellulaire répond auxdits messages de signalisation de protocole, établir le branchement de communication entre l'utilisateur appelant (1120) et l'utilisateur appelé (960) du système mobile cellulaire, le branchement de communication comprenant un canal-B RNIS (1184) entre l'utilisateur appelant (1120) et une des stations de base (970) correspondant à la cellule (932) dans laquelle est situé l'utilisateur appelé (960) du système mobile cellulaire.

4. Le procédé tel qu'énoncé à la revendication 3, dans lequel ladite étape d'établissement comprend les opérations consistant à
convertir lesdits messages de signalisation de chacune des stations de base en un signal d'établissement radio (1145, 1172) indicateur de la requête et propager le signal d'établissement radio (1145, 1172) à partir du port radio de chacune des stations de base (950, 970),
détecter le signal d'établissement radio (1172) par chacun des utilisateurs (960) du système mobile cellulaire et identifier l'utilisateur appelé (960) du système mobile cellulaire à partir de l'identificateur (DN) se trouvant dans le signal d'établissement radio, et
renvoyer un signal d'établissement radio correspondant (1262) depuis l'utilisateur appelé (960) du système mobile cellulaire vers cette station de base (970).

5. Le procédé tel qu'énoncé à la revendication 4, dans lequel ladite étape d'établissement comprend en outre les étapes consistant à convertir les informations de canal-B reçues au niveau de cette station de base (970) en signaux d'information radio de sortie (1172) pour transmission vers l'utilisateur appelé (960) du système mobile cellulaire et convertir les signaux d'information radio d'entrée (1262) reçues à partir de l'utilisateur appelé (960) du système mobile cellulaire en informations compatibles pour transmission sur le canal-B, en achevant ainsi le branchement de communication entre l'utilisateur appelant (1120) du système mobile cellulaire et l'utilisateur appelé (960).

6. Le procédé tel qu'énoncé à la revendication 3 dans lequel ladite étape d'émission-réception de messages de protocole d'établissement d'appel de canal-D comprend les étapes consistant à
envoyer un message EKTS 'ÉTABLISSEMENT' depuis le central (Co) vers le port RNIS-EKTS de chacune des stations de base (950, 970), et
envoyer à la fois un message EKTS 'PROCÉDURE D'APPEL' et un message EKTS 'AVERTISSEMENT' depuis chacune des stations de base (950, 970) vers le central (Co).

7. Le procédé tel qu'énoncé à la revendication 6, dans lequel ladite étape d'établissement du branchement de communication comprend les étapes consistant à
envoyer un message EKTS de canal-D 'BRANCHEMENT' depuis cette station de base (950, 970) vers le central (Co),
envoyer un message de canal-D 'BRANCHEMENT' correspondant depuis le central (Co) vers l'utilisateur appelant (1120),
envoyer un message EKTS de canal-D 'CONFIRMATION DE BRANCHEMENT' depuis l'utilisateur appelant (1120) vers le central (Co),
envoyer un message EKTS de canal-D 'CONFIRMATION DE BRANCHEMENT' correspondant depuis le centrale (Co) vers cette station de base (970).

8. Un procédé de poursuite d'un branchement de communication établi entre un utilisateur (942) de système mobile cellulaire et un autre utilisateur (1420) dans lequel les utilisateurs (942) du système mobile cellulaire ont accès à un réseau cellulaire (900) qui recouvre un certain nombre de cellules (931, 932) prises en charge par un nombre correspondant de stations de base (950, 970) et dans lequel toutes les stations de base (950, 970) sont reliées au même central (Co) dans un "Réseau Numérique avec Intégration de Services" (RNIS) et chaque station de base (950, 970) est configurée avec un port radio (955) pour l'émission-réception de signaux radio avec les utilisateurs cellulaires (942) à l'intérieur de la cellule (931, 932) correspondant à chaque station de base (950, 970), caractérisé en ce que le central (Co) est en outre configuré pour fournir un "Electronique Key Telephone Service" (EKTS) aux stations de base (950, 970), le procédé comprenant les étapes consistant à
configurer chaque station de base (950, 970) avec un port EKTS à base RNIS (953) pour l'émission-réception de messages et d'informations de signalisation EKTS avec le central (Co) par l'intermédiaire d'une interface d'accès (911) présentant un canal-D et un canal-B, et avec un convertisseur (954) pour effectuer une conversion entre les signaux radio et les messages et informations de signalisation EKTS,
en réponse au déplacement de l'utilisateur (942) du système mobile cellulaire d'une cellule d'origine (931) prise en charge par une station de base d'origine (950) jusqu'à une station secondaire (932), détecter les signaux radio (1402) propagés par l'utilisateur (942) du système mobile cellulaire au niveau d'une station de base secondaire (970) recouvrant la cellule secondaire (932),
effectuer un pontage de la station de base secondaire sur le branchement de communication établi (1411) par l'émission-réception de messages de signalisation de protocole de canal-D (1602) avec le central (Co) pour effectuer un branchement de communication de canal-B à trois voies impliquant à la fois les stations de base d'origine et secondaire (950, 970),
notifier la station de base d'origine (950), en utilisant des messages de signalisation de protocole de canal-D (1603) entre le central (Co) et la station de base d'origine (950), de l'activité de pontage de la station de base secondaire (970), et
débrancher la station de base d'origine (950) du branchement de communication de canal-B à trois voies pour produire un branchement à deux voies entre l'utilisateur (942) du système mobile cellulaire et l'autre utilisateur (1420), le branchement à deux voies comprenant un branchement de communication de canal-B (1602) entre la station de base secondaire (970) et le central (Co).

9. Le procédé tel qu'énoncé à la revendication 8, dans lequel l'opération de débranchement pour produire le branchement à deux voies comprend les étapes consistant à convertir les informations de canal-B (1602) reçues au niveau de la station de base secondaire (970) en signaux d'informations radio de sortie (1601) pour transmission vers l'utilisateur (942) du système mobile cellulaire et convertir les signaux d'informations radio d'entrée (1402) reçus à partir de l'utilisateur du système mobile cellulaire en informations compatibles pour transmission sur le canal-B vers l'autre utilisateur, en achevant ainsi la poursuite du branchement de communication stable entre l'utilisateur (942) du système mobile cellulaire et l'autre utilisateur (1420).

10. Le procédé tel qu'énoncé à la revendication 8, comprenant en outre l'étape consistant à envoyer un message EKTS de canal-D 'ÉTABLISSEMENT DE LA TOUCHE' depuis le central (Co) vers la station de base secondaire (970) pendant l'établissement du branchement de communication établi, dans lequel ladite étape de pontage comprend l'étape consistant à envoyer un message EKTS de canal-D 'REMPLACEMENT' depuis la station de base secondaire (970) vers le central (Co), et dans lequel ladite étape de notification comprend l'étape consistant à envoyer un message EKTS de canal-D 'NOTIFICATION' depuis le central (Co) vers la station de base d'origine (950).

11. Un procédé de poursuite d'un branchement de communication établi entre un utilisateur (2042) de système mobile cellulaire PCS et un autre utilisateur (2020) dans lequel les utilisateurs (2042) du système mobile cellulaire PCS ont accès à un réseau cellulaire qui recouvre un certain nombre de cellules (931, 932) prises en charge par un nombre correspondant de stations de base (2050, 2070) et dans lequel toutes les stations de base (2050, 2070) sont reliées au même central (Co) dans un "Réseau Numérique avec Intégration de Services" (RNIS), et chaque station de base (2050, 2070) est configurée avec un port radio pour l'émission-réception de signaux radio avec les utilisateurs cellulaires PCS (2042) à l'intérieur de la cellule (931, 932) correspondant à chaque station de base (2050, 2070), caractérisé en ce que le central (Co) est en outre configuré pour fournir un "Electronic Key Telephone Service" (EKTS) aux stations de base (2050, 2070), le procédé comprenant les étapes consistant à
configurer chaque station de base (2050, 2070) avec un port EKTS à base RNIS pour l'émission-réception de messages et d'informations de signalisation EKTS avec le central par l'intermédiaire d'une interface d'accès (911) présentant un canal-D et un canal-B, et avec un convertisseur pour effectuer la conversion entre les signaux radio et les messages et informations de signalisation EKTS,
affecter chaque station de base (2050, 2070) d'un identificateur unique de sorte que chaque utilisateur du système mobile cellulaire PCS peut identifier chaque station de base,
au fur et à mesure que l'utilisateur (2042) du système mobile cellulaire PCS se déplace d'une cellule d'origine (931) prise en charge par une station de base d'origine (2050) vers une cellule secondaire prise en charge par une station de base secondaire (2070), détecter les signaux radio propagés par la station de base d'origine et la station de base secondaire (2070),
mesurer, par l'utilisateur du système mobile cellulaire PCS, la qualité de la réception depuis la station de base d'origine et depuis la station de base secondaire (2050, 2070),
à chaque fois que la qualité de la réception de la station de base secondaire est supérieure à la qualité de réception de la station de base d'origine, faire amorcer par l'utilisateur (2042) du système mobile cellulaire une requête de transfert du branchement de communication établi (2025) vers la station de base secondaire (2070),
effectuer un pontage de la station de base secondaire (2070) sur le branchement de communication établi par une émission-réception de messages de signalisation de protocole de canal-D avec le central pour effectuer un branchement de communication de canal-B à trois voies impliquant à la fois les stations de base d'origine (2050) et secondaire (2070),
notifier la station de base d'origine, en utilisant des messages de signalisation de protocole de canal-D (DÉBRANCHEMENT) entre le central (Co) et la station de base d'origine (2050), de l'activité de pontage de la station de base secondaire (2070),
débrancher la station de base d'origine du branchement de communication de canal-B à trois voies pour produire un branchement de communication de canal-B à deux voies entre la station de base secondaire (2070) et le central (Co).

12. Le procédé tel qu'énoncé à la revendication 11, dans lequel l'étape de débranchement pour produire le branchement à deux voies comprend les étapes consistant à convertir des informations de canal-B reçues au niveau de la station de base secondaire (2070) en signaux d'information radio de sortie (2072) pour transmission vers l'utilisateur (2042) du système mobile cellulaire PCS, et à convertir les signaux d'information radio d'entrée (2043) reçus à partir de l'utilisateur (2042) du système mobile cellulaire PCS en informations compatibles pour transmission sur le canal-B vers l'autre utilisateur, en achevant ainsi la poursuite du branchement de communication stable entre l'utilisateur (2042) du système mobile cellulaire PCS et l'autre utilisateur (2020).

13. Le procédé tel qu'énoncé à la revendication 12, comprenant, en outre l'étape consistant à envoyer un message EKTS de canal-D 'ÉTABLISSEMENT DE LA TOUCHE' depuis le central (Co) vers la station de base secondaire (2070) pendant l'établissement du branchement de communication établi, dans lequel ladite étape de pontage comprend l'étape consistant à envoyer un message EKTS de canal-D 'REMPLACEMENT' depuis la station de base secondaire (2070) vers le centrale (Co), et dans lequel ladite étape de notification comprend l'étape consistant à envoyer un message EKTS de canal-D 'NOTIFICATION' depuis le central vers la station de base d'origine (2050).

14. Circuit d'établissement d'un branchement de communication entre un utilisateur appelant (941) de système mobile cellulaire et un utilisateur appelé (920) dans lequel les utilisateurs du système mobile cellulaire (941, 942) ont accès à un réseau cellulaire (900) qui recouvre un certain nombre de cellules (931, 932) prises en charge par un nombre correspondant de stations de base (950, 970) et dans lequel toutes les stations de base (950, 970) sont reliées au même central (Co) dans un "Réseau Numérique avec Intégration de Service" (RNIS) et chaque station de base (950, 970) présente des moyens pour le configurer avec un port radio (955) pour l'émission-réception de signaux radio avec les utilisateurs cellulaires (941, 942) à l'intérieur de la cellule correspondant à chaque station de base (950, 970), caractérisé en ce que le central (Co) est en autre configuré pour fournir un "Electronic Key Telephone Service" (EKTS) aux stations de base (950, 970), le circuit comprenant
des moyens pour configurer chaque station de base (950, 970) avec un port EKTS à base RNIS (953) pour l'émission-réception de messages et d'informations de signalisation EKTS avec le central (Co) par l'intermédiaire d'une interface d'accès (911) présentant un canal-D et un canal-B, lesdits moyens de configuration comprenant des moyens (954) pour effectuer une conversion entre les signaux radio et les messages et informations de signalisation EKTS,
des moyens (954), répondant à une requête (944) de l'utilisateur appelant (941) du système mobile cellulaire d'établir le branchement de communication tel que reçu sur le port radio (955) d'une des stations de base (950) prenant en charge la cellule (931) où est situé l'utilisateur appelant (941) du système mobile cellulaire, pour convertir la requête (944) en messages EKTS de signalisation de protocole d'établissement d'appel de canal-D (981),
des moyens (953), répondant auxdits moyens de conversion, pour effectuer l'émission-réception des messages de signalisation de protocole entre cette station de base (950) et le central (Co), et
des moyens (951), répandant auxdits moyens d'émission-réception (953), pour établir le branchement de communication, le branchement de communication comprenant un canal-B RNIS (1082) entre cette station de base (950) et l'utilisateur appelé (920).

15. Circuit d'établissement d'un branchement de communication entre un utilisateur appelant d'entrée (1120) et un utilisateur appelé (960) de système mobile cellulaire dans lequel les utilisateurs (960) du système mobile cellulaire ont accès à un réseau cellulaire (900) qui recouvre un certain nombre de cellules (931, 932) prises en charge par un nombre correspondant de stations de base (950, 970) et dans lequel toutes les stations de base (950, 970) sont reliées au même central (Co) dans un "Réseau Numérique avec Intégration de Services" (RNIS) et chaque station de base (950, 970) présente des moyens pour le configurer avec un port radio (955) pour l'émission-réception de signaux radio avec les utilisateurs cellulaires (960) à l'intérieur de la cellule (931, 932) correspondant à chaque station de base (950, 970), caractérisé en ce que le central (Co) est en autre configuré pour fournir un "Electronic Key Telephone Service" (EKTS) aux stations de base (950, 970), le circuit comprenant
des moyens pour configurer chaque station de base (950, 970) avec un port EKTS à base RNIS (953) pour l'émission-réception de messages et d'informations de signalisation EKTS avec le central par l'intermédiaire d'une interface d'accès (911) présentant un canal-D et un canal-B, lesdits moyens de configuration comprenant des moyens (954) pour effectuer une conversion entre les signaux radio et les messages et informations de signalisation EKTS,
des moyens, répondant à une requête telle que reçue au niveau du central à partir d'un utilisateur appelant d'entrée d'établir le branchement de communication avec l'utilisateur appelé du système mobile cellulaire, pour l'émission-réception de messages de signalisation de protocole d'établissement d'appel de canal-D, qui comprennent un identificateur de l'utilisateur appelé du système mobile cellulaire, entre le central et le port EKTS à base RNIS de chacune des stations de base (950, 970), et
des moyens, répondant auxdits moyens de transmission-réception et à l'utilisateur appelé (942) du système mobile cellulaire ayant ledit identificateur, pour établir le branchement de communication entre l'utilisateur appelant (1120) et l'utilisateur appelé (942) du système mobile cellulaire, le branchement de communication comprenant un canal-B RNIS (1184) entre l'utilisateur appelant (1120) et l'une des stations de base (950) correspondant à la cellule (931) dans laquelle est situé l'utilisateur appelé (942) du système mobile cellulaire.

16. Circuit de traitement d'un branchement de communication établi entre un utilisateur (942) de système mobile cellulaire et un autre utilisateur (1420) dans lequel les utilisateurs (942) du système mobile cellulaire ont accès à un réseau cellulaire (900) qui recouvre un certain nombre de cellules (931, 932) prises en charge par un nombre correspondant de stations de base (950, 970) et dans lequel toutes les stations de base (950, 970) sont reliées au même central (Co) dans un "Réseau Numérique avec Intégration de Services" (RNIS) et chaque station de base (950, 970) présente des moyens pour le configurer avec un port radio (955) pour l'émission-réception de signaux radio avec des utilisateurs cellulaires (942) à l'intérieur de la cellule (931, 932) correspondant à chaque station de base (950, 970), caractérisé en ce que le central (Co) est en outre configuré pour fournir un "Electronic Key Telephone Service" (EKTS) aux stations de base (950, 970), le circuit comprenant
des moyens pour configurer chaque station de base avec un port EKTS à base RNIS (953) pour l'émission-réception de messages et d'informations de signalisation EKTS avec le central (Co) par l'intermédiaire d'une interface d'accès (911) présentant un canal-D et un canal-B, lesdits moyens de configuration comprenant des moyens (954) pour effectuer une conversion entre les signaux radio et les messages et informations de signalisation EKTS,
des moyens, répondant au déplacement de l'utilisateur du système mobile cellulaire d'une cellule d'origine (931) prise en charge par une station de base d'origine (950) jusqu'à une station secondaire (932), pour détecter les signaux radio propagés par l'utilisateur (960) du système mobile cellulaire au niveau d'une station de base secondaire (970) recouvrant la cellule secondaire (932),
des moyens, répondant auxdits moyens de détection, pour effectuer un pontage de la station de base secondaire (970) sur le branchement de communication établi en effectuant une émission-réception de messages de signalisation de protocole de canal-D avec le central (Co) pour effectuer un branchement de communication de canal-B à trois voies impliquant à la fois les stations de base d'origine et secondaire (950, 970),
des moyens (914), répondant auxdits moyens de détection, pour notifier la station de base d'origine, en utilisant des messages de signalisation de protocole de canal-D entre le central et la station de base d'origine (950), de l'activité de pontage de la station de base d'origine, et
des moyens (914), répondant auxdits moyens de détection, pour débrancher la station de base d'origine (950) du branchement de communication du canal-B à trois voies pour produire un branchement à deux voies entre l'utilisateur (942) du système mobile cellulaire et l'autre utilisateur (1120), le branchement à deux voies comprenant un branchement de communication de canal-B entre la station de base secondaire et le central.

17. Circuit de poursuite d'un branchement de communication établi entre un utilisateur (2042) de système mobile cellulaire PCS et un autre utilisateur (2020) dans lequel les utilisateurs (2042) du système mobile cellulaire PCS ont accès à un réseau cellulaire qui recouvre un certain nombre de cellules (931, 932) prises en charge par un nombre correspondant de stations de base (2050, 2070) et dans lequel toutes les stations de base (2050, 2070) sont reliées au même central (Co) dans un "Réseau Numérique avec Intégration de Service" (RNIS) et chaque station de base (2050, 2070) est configurée avec un port radio pour l'émission-réception de signaux radio avec les utilisateurs cellulaires PCS (2042) à l'intérieur de la cellule (931, 932) correspondant à chaque station de base (2050, 2070), caractérisé en ce que le central (Co) est en outre configuré pour fournir un "Electronic Key Telephone Service" (EKTS) aux stations de base (2050, 2070), le circuit comprenant
des moyens pour configurer chaque station de base (2050, 2070) avec un port EKTS à base RNIS pour l'émission-réception de messages et d'informations de signalisation EKTS avec le central par l'intermédiaire d'une interface d'accès (911) présentant un canal-D et un canal-B, lesdits moyens de configuration comprenant des moyens pour effectuer une conversion entre les signaux radio et les messages et informations de signalisation EKTS, chaque station de base (2050, 2070) ayant un identificateur unique de sorte que chaque utilisateur du système mobile cellulaire PCS peut identifier chaque station de base (2050, 2070),
des moyens, répondant au déplacement de l'utilisateur (2042) du système mobile cellulaire PCS d'une cellule d'origine (931) prise en charge par une station de base d'origine (2050) vers une cellule secondaire (932) prise en charge par une station de base secondaire (2070), pour détecter des signaux radio propagés par la station de base d'origine (2050) et la station de base secondaire (2070),
des moyens pour mesurer, par l'utilisateur (2042) du système mobile cellulaire PCS, la qualité de la réception à partir de la station de base d'origine (2050) et à partir de la station de base secondaire (2070),
des moyens, répondant auxdits moyens de mesure, pour faire amorcer par l'utilisateur (2042) du système mobile cellulaire PCS une requête de transfert du branchement de communication établi vers la station de base secondaire (2070) à chaque fois que la qualité de réception de la station de base secondaire (2070) est plus grande que la qualité de réception de la station de base d'origine (2050),
des moyens, répondant auxdits moyens d'amorçage, pour effectuer un pontage de la station de base secondaire sur le branchement de communication établi en effectuant une émission-réception de messages de signalisation de protocole de canal-D avec le central afin de réaliser un branchement de communication de canal-B à trois voies impliquant à la fois les stations de base d'origine et secondaire (2050, 2070),
des moyens, répondant auxdits moyens de pontage, pour notifier la station de base d'origine (2050), en utilisant des messages de signalisation de protocole de canal-D entre le central (Co) et la station de base d'origine (2050), de l'activité de pontage de la station de base secondaire (2070), et
des moyens, répondant auxdits moyens de notification, pour débrancher la station de base d'origine (2050) du branchement de communication de canal-B à trois voies, pour produire un branchement de communication de canal-B à deux voies entre la station de base secondaire (2070) et le central (Co).
